(19) Europäisches Patentamt

European Patent Office

Office européen des brevets

(11) **EP 4 130 656 B1**

(12) **EUROPÄISCHE PATENTSCHRIFT**

(45) Veröffentlichungstag und Bekanntmachung des Hinweises auf die Patenterteilung:
**14.02.2024   Patentblatt 2024/07**

(21) Anmeldenummer: **21189892.9**

(22) Anmeldetag: **05.08.2021**

(51) Internationale Patentklassifikation (IPC):
**G01B 21/04** (2006.01)      **G05B 19/418** (2006.01)

(52) Gemeinsame Patentklassifikation (CPC):
**G01B 21/04; G05B 19/41875;** G05B 2219/32179;
G05B 2219/32191

(54) **VORBEREITUNG DER AUSWERTUNG VON STICHPROBEN VON MESSWERTEN EINER MESSGRÖSSE AUS EINER VERMESSUNG EINER VIELZAHL VON WERKSTÜCKEN DURCH EIN ODER MEHRERE KOORDINATENMESSGERÄTE**

PREPARATION OF THE EVALUATION OF SAMPLES OF MEASURED VALUES FROM A MEASUREMENT OF A PLURALITY OF WORKPIECES BY ONE OR MORE COORDINATE MEASURING DEVICES

PRÉPARATION D'ÉCHANTILLONS DE VALEURS MESURÉES À PARTIR D'UNE MESURE D'UNE PLURALITÉ DE PIÈCES PAR UN OU PLUSIEURS APPAREILS DE MESURE DE COORDONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.02.2023   Patentblatt 2023/06**

(73) Patentinhaber: **Carl Zeiss Industrielle Messtechnik GmbH**
**73447 Oberkochen (DE)**

(72) Erfinder:
• **Rüger, Oliver**
  **01217 Dresden (DE)**
• **Albrecht, Nadine**
  **01277 Dresden (DE)**

(74) Vertreter: **Brunotte, Joachim Wilhelm Eberhard**
**Patentanwälte Bressel und Partner mbB**
**Potsdamer Platz 10**
**10785 Berlin (DE)**

(56) Entgegenhaltungen:
**EP-A1- 3 835 900**

• **LUKIN VLADIMIR ET AL: "A parametric bootstrap method of computation of control limits of charts for skewed distributions", 2015 IEEE NW RUSSIA YOUNG RESEARCHERS IN ELECTRICAL AND ELECTRONIC ENGINEERING CONFERENCE (EICONRUSNW), IEEE, 2. Februar 2015 (2015-02-02), Seiten 102-109, XP032774248, DOI: 10.1109/EICONRUSNW.2015.7102241 ISBN: 978-1-4799-7305-7 [gefunden am 2015-05-05]**

**Beschreibung**

Die Erfindung betrifft ein computerimplementiertes Verfahren zum Vorbereiten der Auswertung von Stichproben von Messwerten einer Messgröße aus einer Vermessung einer Vielzahl von Werkstücken durch ein oder mehrere Koordinatenmessgeräte. Die Erfindung betrifft ferner eine Auswertungsvorrichtung, z. B. aufweisend oder realisiert durch einen Computer oder eine Anordnung von Computern, wobei die Auswertungsvorrichtung ausgestaltet ist, eine Auswertung von Stichproben von Messwerten einer Messgröße aus einer Vermessung einer Vielzahl von Werkstücken durch ein oder mehrere Koordinatenmessgeräte vorzubereiten. Außerdem betrifft die Erfindung ein Computerprogramm, das ausgestaltet ist, die Durchführung des erfindungsgemäßen Verfahrens bei Ausführung des Computerprogramms durch einen Computer oder durch eine Anordnung von Computern zu veranlassen. Auch betrifft die Erfindung ein computerlesbares Speichermedium, aufweisend Befehle, die bei Ausführung durch einen Computer oder durch eine Anordnung von Computern diesen/diese veranlassen, das erfindungsgemäße Verfahren auszuführen.

Bei den Messwerten bzw. den Messdaten handelt es sich um Messwerte bzw. Messdaten, die mittels der Vermessung der Werkstücke durch ein oder mehrere Koordinatenmessgeräte erhalten werden. Die Art der Koordinatenmessgeräte ist nicht auf eine bestimmte Art beschränkt. Solange die Messwerte vergleichbar sind, können auch verschiedene Koordinatenmessgeräte und/oder Koordinatenmessgeräte verschiedenen Typs zur Erzeugung der in einer Stichprobe enthaltenen Messwerte verwendet werden. Die Messwerte können Koordinatenmesswerte oder durch Verarbeitung der Koordinatenmesswerte erhaltene Messwerte sein, z. B. ein Durchmesser eines Werkstücks.

Beispiele für Typen von Koordinatenmessgeräten sind Koordinatenmessgeräte in Portal- oder Gantrybauweise, Koordinatenmessgeräte mit einem Gelenkarm, Roboter oder Werkzeugmaschinen mit zumindest einem Messsensor und Einrichtungen mit einem insbesondere optischen oder einem andersartigen Messsensor, wobei der Messsensor im Messraum fest positioniert ist. Z.B. kann auch ein komplexes Werkstück mittels einer Anordnung von Kameras derart vermessen werden, dass ein Verlauf der Oberfläche des Werkstücks in einem Koordinatensystem des Werkstücks oder des Messraums ermittelt wird. Daraus wiederum können insbesondere Positionen von Oberflächenpunkten oder Oberflächenbereichen des Werkstücks ermittelt werden.

Es sind unterschiedliche Arten von Messsensoren geeignet zur Erzeugung der Messwerte. Z.B. werden insbesondere an klassischen Koordinatenmessgeräten taktile Sensoren und/oder optische Sensoren verwendet. Berührungslos messende Sensoren sind z.B. Abstandssensoren und/oder bildgebende Sensoren wie Kameras. Abstandssensoren können nach unterschiedlichen Messprinzipien funktionieren, und beispielsweise kapazitive Sensoren, induktive Sensoren, Laufzeitsensoren wie TOF-Kameras (Time of Flight Kameras) und/oder chromatisch-konfokale Sensoren sein. Ferner kann zumindest ein Sensor des Koordinatenmessgeräts mittels einer Antriebsvorrichtung bewegt werden und kann die aus einem Maßstabssystem des Koordinatenmessgeräts ermittelte Position des Messsensors in die Bestimmung der Werkstückkoordinaten eingehen.

Die zuvor beschriebenen Koordinatenmessgeräte und Messsensoren sind lediglich Beispiele. Allgemein können die Koordinatenmesswerte von Werkstücken auf beliebige Art erzeugt werden. Bei den Messwerten kann es sich insbesondere um Koordinaten zumindest eines Teils der Werkstückoberfläche und/oder des Werkstückinneren handeln. Koordinaten z.B. von Hohlraumgrenzen oder von Übergängen unterschiedlicher Werkstoffe können beispielsweise mit invasiven Messverfahren wie der Durchstrahlung des Werkstücks aus unterschiedlichen Richtungen mittels Röntgenstrahlung oder anderer invasiver Strahlung und anschließender computergestützter Rekonstruktion (z.B. CT-Verfahren) ermittelt werden. Wie bereits erwähnt können die Messwerte auch aus zumindest einer Koordinate und z.B. aus mehreren Koordinaten des jeweiligen Werkstücks abgeleitete Messwerte wie Radien, Längen, Rundheit und Krümmung sein. Solche abgeleiteten Werte, die insbesondere mehreren Koordinaten des jeweiligen Werkstücks entsprechen, können auch mittels spezieller Messgeräte ohne die explizite Bestimmung der Koordinaten direkt bestimmt werden. Beispielsweise ermöglichen es Kamerabilder, die Rundheit oder den Durchmesser eines zylindrischen Bereichs eines Werkstücks zu bestimmen. Auch sind Messgeräte mit taktilen Sensoren bekannt, die solche abgeleiteten Messgrößen direkt bestimmen.

Ferner können die Messwerte aus den von dem jeweiligen Messgerät oder der Messanordnung erzeugten Rohdaten abgeleitete Messwerte sein oder diese enthalten. So können z.B. die aus der Vermessung einer Mehrzahl gleichartiger Werkstücke erhaltenen Rohdaten bezüglich bekannter Einflüsse auf den Messprozess fehlerkorrigiert werden.

Bei der Vielzahl von Werkstücken, deren Vermessung die Grundlage für die Stichprobe von Messwerten bildet, kann es sich insbesondere um einfache oder komplexe, wiederum aus mehreren Werkstücken zusammengesetzte Werkstücke handeln. Es ist lediglich erforderlich, dass bei der Auswertung vergleichbare Messwerte oder daraus abgeleitete Werte vorliegen. Unter einem Werkstück wird daher sowohl ein einfaches Bauteil wie eine Schraube oder ein Stift als auch ein zusammengesetztes Werkstück oder unregelmäßig geformtes Werkstück wie eine Tür eines Kraftfahrzeugs als auch eine Maschine oder andere Anordnung von Werkstücken verstanden.

Unter einer Stichprobe von Messwerten wird jede Auswahl und/oder jedes Verarbeitungsergebnis aus vorliegenden Messwerten und/oder werden die kompletten Messwerte verstanden. Die Stichprobe von Messwerten bilden eine Grundlage für die statistische Beschreibung bzw. Modellierung.

Die vorliegende Erfindung bezieht sich auf das Gebiet der Qualitätskontrolle von Prozessen zur Herstellung und/oder Bearbeitung von Werkstücken und Anordnungen von Werkstücken auf der Grundlage der Ergebnisse von Messprozessen, nämlich auf Grundlage von Koordinaten-Messwerten der Werkstücke und/oder davon abgeleiteten Messergebnissen. In dem Messprozess wird eine Vielzahl von typgleichen Werkstücken oder Anordnungen von Werkstücken vermessen und wird für jedes der Werkstücke oder Anordnungen von Werkstücken zumindest eine Koordinate gemessen, die optional weiterverarbeitet wird, um ein abgeleitetes Messergebnis zu ermitteln. Beispielsweise wird aus der zumindest einen gemessenen Koordinate ein Radius, ein Durchmesser, eine Länge oder eine Abweichung von einem Sollwert ermittelt. Im Folgenden beziehen sich die Begriffe "Messwert" und "Messergebnis" auf eine gemessene Koordinate oder auf ein von zumindest einer gemessenen Koordinate abgeleitetes Messergebnis. Insbesondere handelt es sich dabei um eine skalare Größe, im Gegensatz zu einer vektoriellen Größe. Verschiedene Koordinaten desselben Messpunkts, der in dem Messprozess von einem Koordinatenmessgerät erfasst wird, zum Beispiel eine x-Koordinate, y-Koordinate und eine z-Koordinate eines kartesischen Koordinatensystems können insbesondere als verschiedene Messwerte verarbeitet werden. Daher findet eine Verarbeitung skalarer Messwerte statt, im Gegensatz zu einer Verarbeitung vektorieller Messwerte, die jeweils mehrere Komponenten aufweisen.

Auf dem genannten Gebiet ist das Konzept der statistischen Prozesskontrolle bekannt. Durch eine statistische Modellierung eines Prozesses wird eine statistische Wahrscheinlichkeitsverteilung (im Folgenden kurz: Verteilung) erhalten, anhand der insbesondere Aussagen über die Häufigkeit von bestimmten, für den Prozess generierten Messwerten getroffen werden können. Ein Ergebnis der statistischen Modellierung kann es sein, dass der Prozess beherrschbar ist, wenn ein vorgegebener Anteil der hergestellten und/oder bearbeiteten Werkstücke oder der Anordnungen von Werkstücken Vorgaben entspricht. Insbesondere dann, wenn die Streubreite der Messwerte gering ist, kann als Ergebnis der statistischen Modellierung auch oder alternativ festgestellt werden, dass die Qualität des Prozesses den Vorgaben entspricht.

Üblicherweise erfolgt die Erstellung eines solchen statistischen Modells, indem Informationen sowohl aus der Kenntnis des Prozesses als auch aus der Auswertung erhaltener Messwerte genutzt werden. Beispielsweise ist es bekannt, dass bei der Vermessung eines Radius des Werkstücks der Prozess durch eine Normalverteilung beschreibbar ist. In diesem Fall streuen die Messwerte aus einer Vermessung einer Vielzahl von Werkstücken gleicher Art zufällig um einen Erwartungswert. Die Normalverteilung ermöglicht es, Parameter wie insbesondere die Streubreite aus ihr zu ermitteln.

Nicht die Ergebnisse jedes Prozesses sind durch eine Normalverteilung sinnvoll beschreibbar. Vielmehr gibt es andere statistische Verteilungen, die die Häufigkeit der Messwerte einer Messgröße in Abhängigkeit von dem Messwert beschreiben. Anders als eine Normalverteilung können die Verteilungen insbesondere lediglich zur statistischen Beschreibung von Messwerten innerhalb eines einseitig oder beidseitig beschränkten Werteintervalls geeignet sein. Eine solche Verteilung weist Werten außerhalb des Werteintervalls keine Häufigkeit zu und/oder die Häufigkeit und somit die Wahrscheinlichkeit für Werte außerhalb des Werteintervalls ist auf den Wert null festgelegt.

Die Erfindung betrifft insbesondere die Qualitätssicherung der oben genannten Prozesse auf Basis von sogenannten Regelkarten (in englischer Sprache: "control chart"). Diese dienen der Überwachung des Prozesses im Rahmen der Qualitätssicherung anhand der Lage und/oder Streuung der Messwerte. Um die Lage und/oder Streuung überwachen zu können, werden die ursprünglich aufgenommenen Messwerte (im Folgenden auch Urwerte genannt) in Unterstichproben aufgeteilt. Beispielsweise werden insbesondere im Messprozess aufeinanderfolgend erhaltene Messwerte, z.B. je fünf oder je zehn Messwerte, zu einer Unterstichprobe zusammengefasst. Für jede dieser Unterstichproben, die auch als Untergruppen bezeichnet werden, kann eine abgeleitete Größe berechnet werden. Abgeleitete Größen sind zum Beispiel Lagegrößen wie der Mittelwert oder der Median der Messwerte. Eine andere Art abgeleiteter Größen sind Streuungsgrößen wie die Standardabweichung oder die Spannweite der Verteilung der Messwerte in der jeweiligen Unterstichprobe.

Durch die Bildung der Unterstichproben und durch die Ermittlung der Werte der abgeleiteten Größe oder der abgeleiteten Größen für die Unterstichproben entsteht eine neue Stichprobe, wobei die Anzahl der Werte jeder der abgeleiteten Größen kleiner ist als die Anzahl der Urwerte. Beispiele werden später noch unter Bezugnahme auf die beigefügte Zeichnung beschrieben.

Wenn sich bei der Qualitätskontrolle ergibt, dass die Ergebnisse des Prozesses nicht den Erwartungen entsprechen, dann kann insbesondere eine Analyse (z. B. des bereits ausgeführten) Prozesses begonnen und/oder durchgeführt werden und/oder kann in den Prozess eingegriffen werden, insbesondere sodass der Prozess in Zukunft verändert ist. Wenn im Folgenden von einem "Eingriff" die Rede ist, schließt dies auch andere mögliche Maßnahmen in Bezug auf den Prozess als eine Veränderung des Prozesses in Zukunft mit ein, wie zum Beispiel eine zusätzliche Analyse des Prozesses mit Fehler-Identifikation oder eine nachträgliche Korrektur der Ergebnisse des Prozesses, wie beispielsweise eine Nachbearbeitung der Werkstücke.

Das Konzept der oben genannten Regelkarten beruht wesentlich auf sogenannten Eingriffsgrenzen. Für zumindest eine abgeleitete Größe wird eine nicht-Eingriffswahrscheinlichkeit festgelegt, zum Beispiel 80 Prozent oder 90 Prozent oder sogar nahe bei 100 Prozent (zum Beispiel mit einem Prozentsatz von ungefähr 99,73, der dem Anteil der Werte entspricht, die innerhalb des Intervalls, welches durch die dreifache Standardabweichung der Normalverteilung in beide Richtungen von deren Mittelwert aufgespannt ist, liegen). Wenn die Werte der abgeleiteten Größe für eine weitere Stichprobe, die aus einer Vielzahl von gebildeten Unterstichproben besteht, mit einem Anteil, der mindestens gleich der nicht-Eingriffswahrscheinlichkeit ist, innerhalb definierter Grenzen liegt, dann ist kein Eingriff in den Prozess erforderlich. Die Grenzen werden so definiert, dass der Wertebereich zwischen ihnen der nicht-Eingriffswahrscheinlichkeit entspricht. In der Praxis kann es aber sinnvoll sein, wie erwähnt die nicht-Eingriffswahrscheinlichkeit nahe bei 100 Prozent zu wählen. In diesem Fall kann jeder Wert der abgeleiteten Größe, der aus einer neu gebildeten Untergruppe resultiert und der außerhalb der Eingriffsgrenzen liegt, als Hinweis auf eine mögliche Veränderung des zugrunde liegenden Prozesses gewertet werden. Dies schließt nicht aus, dass nachträglich für eine Vielzahl von Werten der abgeleiteten Größe überprüft wird, ob tatsächlich ein zu hoher Anteil außerhalb des Bereichs der Eingriffsgrenzen liegt. Auch wenn der Prozentsatz der nicht-Eingriffswahrscheinlichkeit nahe bei 100 liegt, ist eine präzise Bestimmung der Eingriffsgrenzen wichtig. Sogar insbesondere in diesem Fall kann eine nicht präzise festgelegte Eingriffsgrenze dazu führen, dass ein auf eine Veränderung des zugrunde liegenden Prozesses hindeutender Wert der abgeleiteten Größe nicht als solcher erkannt wird oder fälschlicherweise als solcher erkannt wird.

Der Begriff der "Wahrscheinlichkeit" in dem Ausdruck "nicht-Eingriffswahrscheinlichkeit" beruht zunächst auf der Annahme, dass der zugrunde liegende Prozess stabil den Erwartungen entsprechend durchgeführt wird. In diesem Fall liegen die Werte der abgeleiteten Größe gemäß mit der nicht-Eingriffswahrscheinlichkeit innerhalb der Grenzen. In der Praxis sollen aber mithilfe der definierten Grenzen Prozesse identifiziert werden, die nicht mehr stabil sind.

Bei den definierten Grenzen handelt es sich um eine obere Grenze und eine untere Grenze für die jeweilige abgeleitete Größe. Ist die abgeleitete Größe eine Lagegröße, dann kann der eine Grenzwert je nach Art der zugrundeliegenden Messgröße auch null sein. Zum Beispiel kann die Messgröße der Absolutwert einer Abweichung von einem erwarteten Wert sein. In diesem Fall ist der untere Grenzwert null und enthält der Wertebereich nur positive Werte. In der Regel ist aber für die jeweilige Messgröße sowohl ein unterer Grenzwert als auch ein oberer Grenzwert ungleich null für die Lagegröße festzulegen.

Auch wenn die abgeleitete Größe eine Streuungsgröße ist, kann der eine Grenzwert in eher seltenen Fällen sinnvollerweise null sein, oder es können beide Grenzwerte ungleich null festgelegt werden. Dies hängt von der Art der Streuungsgröße und/oder der Art der (erwarteten) statistischen Verteilung ab, gemäß der die Werte der abgeleiteten Größe statistisch verteilt sind.

Ein unterer Grenzwert und ein oberer Grenzwert ungleich null werden vorzugsweise so festgelegt, dass unterhalb des unteren Grenzwerts liegende Werte der abgeleiteten Größe mit derselben Wahrscheinlichkeit erwartet werden wie oberhalb des oberen Grenzwerts liegende Werte der abgeleiteten Größe.

In allen Fällen von Messgrößen und abgeleiteten Größen existieren jedoch gemäß dem Konzept der Regelkarten ein unterer Grenzwert und ein oberer Grenzwert für die jeweilige abgeleitete Größe. Liegt ein Anteil der Werte der abgeleiteten Größe, der der festgelegten nicht-Eingriffswahrscheinlichkeit entspricht, innerhalb dieser Grenzen, d. h. zwischen dem unteren Grenzwert und dem oberen Grenzwert, dann wird kein Eingriff in den Prozess gefordert. Andernfalls wird ein Eingriff in den Prozess gefordert oder empfohlen, beispielsweise durch Ausgabe eines entsprechenden Signals.

Sinnvoll ist eine solche Prüfung, ob der Anteil der Werte der abgeleiteten Größe der festgelegten nicht-Eingriffswahrscheinlichkeit entspricht, nur so lange bzw. so weit, wie der zugrundeliegende Prozess gleich bleibenden Einflussgrößen unterliegt. Ändert sich zum Beispiel die Temperatur bei der Herstellung einer Serie von Werkstücken erheblich, dann kann dies Auswirkungen auf die Abmessungen der hergestellten Werkstücke haben. Selbstverständlich gibt es auch weitgehend temperaturunabhängige oder temperaturkompensierte Herstellungs- und Bearbeitungsprozesse. Es handelt sich bei der Temperaturabhängigkeit lediglich um ein Beispiel. Es existieren eine andere Einflussgrößen wie zum Beispiel die bei der Herstellung oder Bearbeitung verwendete Maschine.

Aus der Forderung, dass Werte der abgeleiteten Größe entsprechend der nicht-Eingriffswahrscheinlichkeit in den genannten definierten Grenzen liegen sollen, ergibt sich die folgende mathematische Definition der Eingriffsgrenzen bzw. der oben genannten Grenzwerte der abgeleiteten Größe. Sei X die Zufallsvariable, die den zum Erhalt der Urwerte führenden Prozess beschreibt, und sei $D_X$ deren Verteilung, dann seien R die Zufallsvariable, die die abgeleitete Größe beschreibt, und $D_R$ deren Verteilung. Bezüglich einer nicht-Eingriffswahrscheinlichkeit c sollen die Eingriffsgrenzen l (unterer Grenzwert), u (oberer Grenzwert) dann erfüllen:

$$P(R \in [l, u]) = c \qquad (1)$$

Gleichung (1) kann in dem Sinn interpretiert werden, dass die Wahrscheinlichkeit P dafür, dass die abgeleitete Größe R innerhalb des Intervalls [l, u] liegt, c * 100 % beträgt.

Bei der praktischen Ausführung der Qualitätssicherung ist der Zusammenhang zwischen der Urwerteverteilung und der Verteilung der abgeleiteten Größe im Vorhinein meist unbekannt. Um die Verteilung der abgeleiteten Größe zu erhalten, kann wie folgt vorgegangen werden: Aus der Stichprobe der Urwerte werden zunächst Unterstichproben gebildet. Für jede der Unterstichproben werden die Werte der abgeleiteten Größe (zum Beispiel eine Lagegröße wie der Mittelwert, alternativ zum Beispiel der Median, oder eine Streuungsgröße wie die Standardabweichung oder die Spannweite) berechnet. Auf die so erhaltene Stichprobe der abgeleiteten Größe wird ein sogenanntes Verteilungsanpassungsverfahren angewendet, bei dem eine kontinuierliche statistische Verteilungsdichtefunktion an die der Werte der Stichprobe der abgeleiteten Größe angepasst wird. Diese kontinuierliche statistische Verteilungsdichtefunktion beschreibt die aus dem Prozess resultierende Verteilung näherungsweise und die Verteilung wird daher auch als "geschätzte Verteilung" bezeichnet. Gemäß einem Beispiel für ein Verteilungsanpassungsverfahren können Momente der diskreten Verteilung z.B. bis zur dritten Ordnung (Schiefe) oder bis zur vierten Ordnung (Kurtosis) und optional noch höherer Ordnung ermittelt werden. Im Fall bestimmter Verteilungstypen wie zum Beispiel der Normalverteilung können auch lediglich Momente niedrigerer Ordnung (zum Beispiel erster und zweiter Ordnung) ermittelt werden. Ferner können aus einem System kontinuierlicher Verteilungen wie dem Pearson-Verteilungssystem ein geeigneter Verteilungstyp ausgewählt werden und diejenige Verteilung des ausgewählten Typs als angepasste Verteilung ermittelt werden, die die ermittelten Werte der Momente hat.

Die Anpassung eines Verteilungstyps einer kontinuierlichen statistischen Verteilung an die Werte einer abgeleiteten Größe, die aus Messwerten einer Stichprobe von Messwerten gewonnen wurden, oder auch die Anpassung eines Verteilungstyps einer kontinuierlichen statistischen Verteilung zum Beispiel an die Messwerte der Stichprobe selbst sind nicht auf Verteilungen bzw. Verteilungsdichtefunktionen beschränkt, deren Parameter Momente sind. Auch ist die Anpassung nicht auf Verteilungen aus dem Pearson-Verteilungssystem beschränkt. Es gibt auch andere Verteilungstypen, die ebenfalls für die Anpassung geeignet sind. Beispiele sind Rice-Verteilungen (nach Stephen O. Rice).

Der gesamte vorgenannte Sachverhalt trifft auf die vorliegende Erfindung oder Ausgestaltungen davon zu.

Bekannt ist es, unter Verwendung der geschätzten, angepassten Verteilung der Stichprobe der abgeleiteten Größe die Eingriffsgrenzen bezüglich der geforderten nicht-Eingriffswahrscheinlichkeit zu bestimmen. Bei Stichproben mit einer statistisch betrachtet geringen Anzahl von Werten, zum Beispiel lediglich weniger als 100 Werten, gibt die angepasste Verteilung die tatsächliche Wahrscheinlichkeitsverteilung nur ungenau wieder. Die Lage zumindest einer der Eingriffsgrenzen kann daher ungenau sei und es kann daher zu einem nicht erforderlichen Eingriff in den zugrunde liegenden Prozess kommen oder ein gemäß der vorgegebenen nicht-Eingriffswahrscheinlichkeit gewünschter Eingriff findet nicht statt.

Lukin, Vladimir, et al., "A parametric bootstrap method of computation of control limits of charts for skewed distributions", 2015 IEEE NW RUSSIA YOUNG RESEARCHERS IN ELECTRICAL AND ELECTRONIC ENGINEERING CONFERENCE, IEEE, 2. Februar 2015, Seiten 102 - 109, XP032774248, ISBN: 978 - 1-4799-7305-7, beschreibt ein Bootstrap-Verfahren zum Berechnen von Grenzen für schiefe Verteilungen. Es wird ein Algorithmus eines parametrisierten Bootstrap-Verfahren angegeben. Dabei wird von einem beobachteten Prozess eine Probe von Untergruppen mit jeweils einer Anzahl von Messwerten erstellt (Schritt 1). Gemäß Schritt 4 können Proben-Populationen von einem stabilen Prozess gewonnen werden. In Schritt 5 wird ein Verfahren der pseudozufälligen Werteerzeugung dazu verwendet, eine Probe zu erhalten. Gemäß Schritt 6 werden die Werte zufällig in Untergruppen unterteilt und wird für jede Untergruppe die Standardabweichung berechnet. In Schritt 7 werden Werte der Untergruppen-Mittelwerte in aufsteigender Reihenfolge geordnet und obere und untere Kontrollgrenzen ermittelt. In Schritt 8 werden Werte der Standardabweichung in aufsteigender Reihenfolge geordnet und obere und untere Kontrollgrenzen ermittelt. Die Schritte 6 und 7 können für beliebige Statistiken wiederholt werden, um die Kontrollgrenzen zu berechnen.

Es ist eine Aufgabe der vorliegenden Erfindung, die Auswertung von Stichproben von Messwerten einer Messgröße aus einer Vermessung einer Vielzahl von Werkstücken durch ein oder mehrere Koordinatenmessgeräte so vorzubereiten, dass ein Eingriff in den zugrunde liegenden Prozess der Herstellung und/oder Bearbeitung von Werkstücken und Anordnungen von Werkstücken mit hoher Wahrscheinlichkeit genau dann stattfindet kann, wenn er gemäß einer statistischen Vorgabe gewünscht ist.

Bei der statistischen Vorgabe kann es sich insbesondere um die oben genannte nicht-Eingriffswahrscheinlichkeit handeln. Es kann sich jedoch alternativ um eine andere, der nicht-Eingriffswahrscheinlichkeit äquivalente Vorgabe handeln, wie zum Beispiel eine Vorgabe, unter welchen Bedingungen eine Warnung ausgegeben werden soll, dass der zugrunde liegende Prozess möglicherweise nicht stabil ist.

Es wird vorgeschlagen, eine hohe Genauigkeit bei der Bestimmung zumindest einer Eingriffsgrenze gemäß dem oben dargelegten Konzept der Regelkarten zu erreichen, indem die statistische Basis für eine Anpassung eines Verteilungstyps einer kontinuierlichen statistischen Verteilung an die Berechnungswerte der abgeleiteten Größe vergrößert wird. Die abgeleitete Größe ist wie oben beschrieben eine Lagegröße oder Streuungsgröße.

Zunächst wird ein Verteilungstyp einer kontinuierlichen statistischen Verteilung an Messwerte einer Stichprobe von Messwerten einer Messgröße aus einer Vermessung einer Vielzahl von Werkstücken durch ein oder mehrere Koordinatenmessgeräte angepasst. Es wird eine erste angepasste kontinuierliche statistische Verteilung erhalten, insbesondere als Verteilungsdichtefunktion. Dabei handelt es sich um diejenige Stichprobe (im Folgenden: "Basis-Stichprobe") von Messwerten, die die Basis für die Bestimmung der Eingriffsgrenzen bildet.

Dann wird eine Mehrzahl von synthetischen Werten der Messgröße erzeugt, die bezüglich der Wahrscheinlichkeit ihres Auftretens der ersten angepassten kontinuierlichen statistischen Verteilung gehorchen. Dabei kann die Wahrscheinlichkeit des Auftretens für die Gesamtheit der synthetischen Werte und der Messwerte oder (bei einer anderen Ausführungsform der Erfindung) für die synthetischen Werte allein der ersten angepassten kontinuierlichen statistischen Verteilung entsprechen. Die Gesamtheit der synthetischen Werte und der Messwerte oder (bei der anderen Ausführungsform) die synthetischen Werte bilden somit eine Häufigkeitsverteilung, die durch die erste angepasste kontinuierliche statistische Verteilung beschrieben wird.

Insbesondere kann optional zusätzlich überprüft werden, dass die Gesamtheit der synthetischen Werte und der Messwerte oder die synthetischen Werte bezüglich der Wahrscheinlichkeit ihres Auftretens der ersten angepassten kontinuierlichen statistischen Verteilung gehorchen. Hierzu kann an die Verteilung der synthetischen Werte der Messgröße eine weitere Verteilung vom gleichen Typ wie die erste angepasste kontinuierliche statistische Verteilung angepasst werden und kann die weitere Verteilung mit der ersten angepassten kontinuierlichen statistischen Verteilung verglichen werden. Wenn sich die Verteilungen gemäß einem vorgegebenen Kriterium nur geringfügig (insbesondere gemäß einer vordefinierten maximal erlaubten Toleranz) voneinander abweichen, entspricht die Verteilung der synthetischen Werte der ersten angepassten kontinuierlichen statistischen Verteilung. Außerdem ist in diesem Fall die statistische Basis gut für die Bestimmung der zumindest einen Eingriffsgrenze geeignet. Eine hohe Genauigkeit bei der Bestimmung der Eingriffsgrenze kann aber auch dann erzielt werden, wenn die Anzahl der synthetischen Werte geringer ist und bei der Weiterverarbeitung der Werte der Messgröße auch die Messwerte der Messgröße berücksichtigt werden.

Die synthetischen Werte können insbesondere zufällig oder pseudozufällig ausgewählt werden, wobei zusätzlich zu berücksichtigen ist, dass die Wahrscheinlichkeit des Auftretens der synthetischen Werte der ersten angepassten kontinuierlichen statistischen Verteilung gehorcht. Häufig werden in der Computertechnik statt Zufallszahlen Pseudo-Zufallszahlen ermittelt, beispielsweise aus langen Folgen von vorher ermittelten Zahlen, die eine Folge von Zufallszahlen simulieren. Dabei kann insbesondere immer wieder zufällig oder pseudozufällig eine neue Position in der Folge ermittelt werden, und die dieser Position zugeordnete Zahl als Pseudo-Zufallszahl ausgegeben werden.

Beispielsweise kann für jeden der synthetischen Werte zunächst eine Zufallszahl oder Pseudo-Zufallszahl (im Folgenden kann "Zufallszahl" eine zufällig oder pseudozufällig ermittelte Zahl sein, insbesondere im Intervall von 0 bis 1) erzeugt werden und können aus den erzeugten Zufallszahlen durch Anwenden einer mathematischen Funktion die synthetischen Werte erzeugt werden. Bei der mathematischen Funktion kann es sich insbesondere um die Quantilfunktion der ersten angepassten kontinuierlichen statistischen Verteilung handeln. Dies wird im Folgenden näher erläutert:

Sei eine Verteilung D gegeben, nämlich die erste angepasste kontinuierliche statistische Verteilung. Für diese Verteilung können eine Verteilungsdichtefunktion bzw. Wahrscheinlichkeitsdichtefunktion f(x), eine Verteilungsfunktion F(x), die das Integral der Wahrscheinlichkeitsdichtefunktion ist, und eine Quantilfunktion q(x), die die Umkehrfunktion der Verteilungsfunktion F(x) ist, definiert werden oder liegen vor. Es ist bekannt, dass Zufallszahlen im Intervall [0,1] gleichverteilt erzeugt werden können. Gleichverteilt bedeutet hier, dass jeder Wert dieselbe Wahrscheinlichkeit hat aufzutreten. Soll nun eine Anzahl n synthetischer Werte erzeugt werden, so kann zunächst eine geordnete Menge $S_1$ mit einer Anzahl n Zufallszahlen $s_1, s_2, ..., s_n$ in dem Intervall [0,1] erzeugt werden:

$$S_1 = \{s_1, s_2, ..., s_n\}$$

Die Ordnung der Zufallszahlen in der Menge $S_1$ ergibt sich zum Beispiel aus der Reihenfolge der Ermittlung der einzelnen Zufallszahlen. Danach kann die Quantilfunktion q(x) auf die Zufallszahlen angewendet werden. Dabei ist x die Variable der Quantilfunktion q(x) und es wird für jede der Zufallszahlen $s_1, s_2, ..., s_n$ der Funktionswert der Quantilfunktion q(x) gebildet, wodurch die geordnete Menge $S_2$ der synthetischen Werte erhalten wird:

$$S_2 = \{q(s_1), q(s_2), ..., q(s_n)\}$$

Die geordnete Menge $S_2$ enthält zufällig erzeugte synthetische Werte, die entsprechend der Verteilung D verteilt sind. Zur Bildung von Untergruppen (siehe unten) können dann Werte in der Reihenfolge der Ordnung aus der Menge $S_2$ entnommen werden.

Es ist jedoch statt der Erzeugung der Zufallszahlen nach der Ermittlung der ersten angepassten kontinuierlichen statistischen Verteilung (im Folgenden auch: Zielverteilung) möglich, vorher erzeugte Zufallszahlen zu verwenden. Dabei kann es sich zum Beispiel um gleichverteilte Zufallszahlen handeln. Die weitere Vorgehensweise kann dann zum Beispiel wie zuvor beschrieben sein. Es kann sich dabei aber auch um Zufallszahlen handeln, die gemäß einer Verteilung verteilt sind, die denselben Typ wie die Zielverteilung hat. In diesem Fall sind jedoch die Parameter der Verteilung in der Regel nicht gleich den Parametern der Zielverteilung. Die Verteilung kann in diesem Fall noch angepasst werden, was als Transformation bezeichnet werden kann. Dabei werden die Zufallszahlen so verändert, dass die Parameter durch die Anpassung der Zielverteilung entsprechen. Beispielsweise im Fall des Typs Normalverteilung kann die Verteilung der Zufallszahlen den Erwartungswert 0 und die Standardabweichung 1 haben. Wenn die Zielverteilung den Erwartungswert E und die Standardabweichung G hat, so werden die Zufallszahlen zur Transformation mit der Standardabweichung G multipliziert und es wird der Erwartungswert E hinzuaddiert.

Es ist zwar bevorzugt, aber nicht erforderlich, die synthetischen Werte auf der Basis von Zufallszahlen zu erzeugen. Stattdessen ist es möglich zunächst Stützstellen z. B. im Intervall [0, 1] zu generieren, zum Beispiel in 1/1000 Schritten zur Generierung von 1000 Stützstellen. Auf die so generierten Stützstellen kann nun, wie oben für Zufallszahlen im Intervall [0, 1] beschrieben, die Quantilfunktion $q(x)$ angewendet werden um eine Menge Menge $S'_2$ zu erhalten. Diese Menge $S'_2$ unterscheidet sich von der oben erwähnten geordneten Menge $S_2$ dadurch, dass sie keine Reihenfolge zufällig erzeugter Werte aufweist. Daher ist sie noch nicht zur Simulation der Entstehung von Messwerten geeignet. Es kann aber nun die Reihenfolge der Werte der Menge $S'_2$ auf Basis von Zufallszahlen umgeordnet werden. Zum Beispiel wird dann für jeden der Werte in der Menge $S'_2$ eine Zufallszahl erzeugt und dem Wert zugeordnet. Anschließend werden die Werte in der Menge $S'_2$ entsprechend der Größe der ihnen zugeordneten Zufallszahl umgeordnet, d. h. der Wert mit der kleinsten zugeordneten Zufallszahl steht an erster Stelle (oder in einem anderen Ausführungsbeispiel an letzter Stelle) usw. Mit der umgeordneten Menge wird eine für die weiteren Verfahrensschritte geeignete Menge synthetischer Werte erzeugt. Statt der Umordnung kann jedoch alternativ bei der Erzeugung der Untergruppen (siehe unten) wiederholt zufällig jeweils ein Wert aus der Menge $S'_2$ ausgewählt und entnommen (d.h. aus der Menge $S'_2$ entfernt) werden, bis die Untergruppe gebildet ist. Dann können weitere Untergruppen auf gleiche Weise durch zufällige Auswahl und Entnahme von Werten aus der Menge gebildet werden, bis die Menge keine Werte mehr enthält.

Insbesondere kann eine Anzahl von synthetischen Werten der Messgröße erzeugt werden, die mindestens gleich der Hälfte der Anzahl von Messwerten der Messgröße in der Basis-Stichprobe ist und vorzugsweise mindestens gleich der Anzahl von Messwerten der Messgröße in der Basis-Stichprobe ist. Insbesondere wenn eine Anzahl von synthetischen Werten der Messgröße erzeugt wird, die sehr viel größer (zum Beispiel mindestens doppelt so groß oder mindestens fünfmal so groß) ist, als die Anzahl der Messwerte der Messgröße in der Basis-Stichprobe, kann die Bestimmung der zumindest einen Eingriffsgrenze optional allein durch Verarbeitung der synthetischen Werte erfolgen, d. h. die Messwerte der Messgröße in der Basis-Stichprobe können außer für den Erhalt der ersten angepassten kontinuierlichen statistischen Verteilung unberücksichtigt bleiben.

Ferner wird eine Mehrzahl von Untergruppen aus der Gesamtheit der Messwerte und der synthetischen Werte der Messgröße gebildet, wobei jede der Mehrzahl von Untergruppen eine Mehrzahl der Messwerte und/oder der synthetischen Werte der Messgröße aufweist. Wie in den Absätzen zuvor erwähnt stehen zwar grundsätzlich die Gesamtheit der Messwerte und der synthetischen Werte der Messgröße für die Bildung der Untergruppen zur Verfügung. Dies schließt jedoch mit ein, dass nicht alle Werte der Gesamtheit zur Bildung der Untergruppen herangezogen werden. Dabei wird jedoch bevorzugt, dass zumindest alle erzeugten synthetischen Werte der Messgröße herangezogen werden. Dies ermöglicht es, die Untergruppen auch tatsächlich entsprechend der ersten angepassten statistischen Verteilung zu bilden. Jedenfalls das Weglassen einer Mehrzahl von synthetischen Werten kann die angepasste Verteilungsdichtefunktion verfälschen.

Für jede der Untergruppen wird ein Berechnungswert einer abgeleiteten Größe berechnet. Es können auch Berechnungswerte einer Mehrzahl abgeleiteter Größen für jede der Untergruppen berechnet werden, z. B. wenn bezüglich mehr als einer abgeleiteten Größe zumindest eine Eingriffsgrenze ermittelt werden soll.

Es werden dann ein Verteilungstyp einer kontinuierlichen statistischen Verteilung an die Berechnungswerte der abgeleiteten Größe angepasst und diese Weise eine zweite angepasste kontinuierliche statistische Verteilung erhalten. Bei diesem Verteilungstyp handelt es sich in der Regel um einen anderen Verteilungstyp als bei der Anpassung der ersten angepassten kontinuierlichen statistischen Verteilung. Grundsätzlich kommen aber alle Verteilungstypen wie bei der Anpassung der ersten angepassten kontinuierlichen statistischen Verteilung infrage.

Anschließend werden eine obere Grenze und eine untere Grenze eines Wertebereichs von Werten der abgeleiteten Größe derart bestimmt, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist.

Bei den Werten der abgeleiteten Größe kann es sich um die Berechnungswerte handeln, d. h. die berechneten Werte der abgeleiteten Größe. Bevorzugt wird jedoch, dass die obere Grenze und die untere Grenze ohne Berücksichtigung der konkret berechneten Werte anhand der zweiten angepassten kontinuierlichen statistischen Verteilung bestimmt werden. Diese Berechnungswerte werden daher (bezüglich der Bestimmung der oberen und unteren Grenze) lediglich zur Anpassung der zweiten angepassten kontinuierlichen statistischen Verteilung verwendet.

Abhängig von der Art der Messgröße und/oder des Messverfahrens kann die obere Grenze oder die untere Grenze nur einen sinnvollen Wert haben, zum Beispiel null. Die Bestimmung dieser Grenze kann sich daher darin erschöpfen, dass der sinnvolle Wert ermittelt wird oder auch lediglich der bekannte sinnvolle Wert übernommen wird. Nur die andere Grenze basiert auf den Messwerten der Messgröße, den synthetischen Werten der Messgröße und der Anpassung der statistischen Verteilungen. Die vorgegebene statistische Wahrscheinlichkeit ist die oben genannte statistische Vorgabe oder äquivalent dazu.

Aufgrund der vergrößerten statistischen Basis, insbesondere der größeren Anzahl von Untergruppen, wird zumindest eine der Grenzen (die obere Grenze und/oder die untere Grenze) genauer bestimmt. Anders ausgedrückt steht eine größere Anzahl an Untergruppen und damit eine größere Anzahl an Berechnungswerten der abgeleiteten Größe zur Verfügung, die eine präzisere Ermittlung der zweiten angepassten kontinuierlichen statistischen Verteilung erlaubt.

Hinzu kommt, dass in vielen Fällen für die Messwerte eine zutreffende Vorstellung vorhanden ist, mit welchem Verteilungstyp die Verteilung der Messwerte präzise beschreibbar ist. Es kann daher eine Verteilung dieses Verteilungstyps an die Stichprobe von Messwerten angepasst werden. Dagegen ist in vielen Fällen nicht bekannt oder unsicher, mit welchem konkreten Verteilungstyp die Verteilung der aus den Untergruppen berechneten Berechnungswertes der abgeleiteten Größe gut beschreibbar ist. Insbesondere kann es daher sinnvoll sein, aus einem System von verschiedenen Verteilungstypen (wie dem Pearson- Verteilungssystem) auch den Verteilungstyp zu ermitteln. Hierzu sind in der Regel mehr Parameter der Verteilung anzupassen, als es zum Beispiel bei Anpassung einer Normalverteilung der Fall wäre. Im Fall des Pearson-Verteilungssystems sind z.B. der Mittelwert, die Standardabweichung, die Schiefe und die Kurtosis anzupassen. Um jedoch eine größere Anzahl von Parametern bei der Ermittlung der zweiten angepassten kontinuierlichen statistischen Verteilung sinnvoll anzupassen, wird eine größere Anzahl von Berechnungswerten aus den Untergruppen benötigt.

Bei einer Ausgestaltung der Erfindung werden daher bei der Ermittlung der zweiten angepassten kontinuierlichen statistischen Verteilung zumindest drei (und vorzugsweise zumindest vier) Verteilungsparameter eines Verteilungstyps oder eines Systems mit mehreren Verteilungstypen durch Auswertung der Berechnungswerte angepasst.

Bei dem Verfahren handelt es sich um ein computerimplementiertes Verfahren, das somit auf zumindest einem Computer ausgeführt wird. Die Art des zumindest einen Computers ist nicht beschränkt. Insbesondere kommen handelsübliche Personalcomputer (PC), Desktopcomputer, Notebookcomputer, mit einer Hand oder zwei Händen tragbare Computer wie Smartphones und Tabletcomputer, ausgelagerte Recheneinheiten auf Grafikkarten oder auf anderen Karten (englisch: boards) für Computer, Computeranordnungen in Rechenzentren und verteilte Computeranordnungen, die beispielsweise über Datenübertragungsnetze miteinander verbunden sind, infrage. Es kommen auch Computer infrage, die Teil der Steuerung eines Koordinatenmessgeräts oder einer Anordnung von Koordinatenmessgeräten sind, sowie Computer, die für die Auswertung von Messwerten bzw. Messdaten ausgestaltet sind, die von Koordinatenmessgeräten erzeugt wurden, oder Computer, die zur Planung der Vermessung von Werkstücken und Anordnungen von Werkstücken ausgestaltet sind.

Insbesondere wird vorgeschlagen: Ein computerimplementiertes Verfahren zum Vorbereiten einer Auswertung von Stichproben von Messwerten einer Messgröße aus einer Vermessung einer Vielzahl von Werkstücken durch ein oder mehrere Koordinatenmessgeräte, mit folgenden Schritten

- Anpassung eines Verteilungstyps einer kontinuierlichen statistischen Verteilung an Messwerte einer Stichprobe von Messwerten und Erhalt einer ersten angepassten kontinuierlichen statistischen Verteilung,

- Erzeugung einer Mehrzahl von synthetischen Werten der Messgröße, die bezüglich der Wahrscheinlichkeit ihres Auftretens der ersten angepassten kontinuierlichen statistischen Verteilung gehorchen,

- Bildung einer Mehrzahl von Untergruppen aus der Gesamtheit der Messwerte und der synthetischen Werte der Messgröße, wobei jede der Mehrzahl von Untergruppen eine Mehrzahl der Messwerte und/oder der synthetischen Werte der Messgröße aufweist,

- für jede der Untergruppen Berechnung eines Berechnungswertes einer abgeleiteten Größe, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt,

- Anpassung eines Verteilungstyps einer kontinuierlichen statistischen Verteilung an die Berechnungswerte der abgeleiteten Größe und Erhalt einer zweiten angepassten kontinuierlichen statistischen Verteilung,

- Bestimmung einer oberen Grenze und einer unteren Grenze eines Wertebereichs von Werten der abgeleiteten Größe derart, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist.

Außerdem wird vorgeschlagen: Eine Auswertungsvorrichtung zur Verarbeitung von Stichproben von Messwerten einer Messgröße aus einer Vermessung einer Vielzahl von Werkstücken durch ein oder mehrere Koordinatenmessgeräte, wobei die Auswertungsvorrichtung aufweist:

- eine Messwert-Schnittstelle zum Empfangen von Messwerten einer Stichprobe von Messwerten,
- eine erste Anpassungseinrichtung, die mit der Messwert-Schnittstelle verbunden ist und die ausgestaltet ist, einen Verteilungstyp einer kontinuierlichen statistischen Verteilung an Messwerte einer Stichprobe von Messwerten anzupassen und eine erste angepasste kontinuierliche statistische Verteilung zu erhalten,
- eine Erzeugungseinrichtung, die mit der ersten Anpassungseinrichtung verbunden ist und die ausgestaltet ist, eine Mehrzahl von synthetischen Werten der Messgröße zu erzeugen, die bezüglich der Wahrscheinlichkeit ihres Auftretens der ersten angepassten kontinuierlichen statistischen Verteilung gehorchen,
- eine Untergruppen-Bildungseinrichtung, die mit der Erzeugungseinrichtung verbunden ist und die ausgestaltet ist, eine Mehrzahl von Untergruppen aus der Gesamtheit der Messwerte und der synthetischen Werte der Messgröße zu bilden, wobei jede der Mehrzahl von Untergruppen eine Mehrzahl der Messwerte und/oder der synthetischen Werte der Messgröße aufweist,
- eine Berechnungseinrichtung, die mit der Untergruppen-Bildungseinrichtung verbunden ist und die ausgestaltet ist, für jede der Untergruppen einen Berechnungswert einer abgeleiteten Größe zu berechnen, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt,
- eine zweite Anpassungseinrichtung, die mit der Berechnungseinrichtung verbunden ist und die ausgestaltet ist, einen Verteilungstyp einer kontinuierlichen statistischen Verteilung an die Berechnungswerte der abgeleiteten Größe anzupassen und eine zweite angepasste kontinuierliche statistische Verteilung zu erhalten,
- eine Bestimmungseinrichtung, die mit der Berechnungseinrichtung und der zweiten Anpassungseinrichtung verbunden ist und die ausgestaltet ist, eine obere Grenze und eine untere Grenze eines Wertebereichs von Werten der abgeleiteten Größe derart zu bestimmen, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist.

Optional können die erste und die zweite Anpassungseinrichtung dieselbe Anpassungseinrichtung sein, d.h. die Anpassungseinrichtung kann für beide genannten Funktionen ausgebildet sein.

Die Erfindung betrifft ferner ein computerlesbares Speichermedium, aufweisend Befehle, die bei Ausführung durch einen Computer oder durch eine Anordnung von Computern diesen/diese veranlassen, das erfindungsgemäße Verfahren in einer der in dieser Beschreibung beschriebenen Ausgestaltungen auszuführen. Das Computerprogramm kann auf einem computerlesbaren Datenträger gespeichert sein. Ferner kann ein Datenträgersignal das Computerprogramm übertragen.

Ausgestaltungen des computerimplementierten Verfahrens, der Auswertungsvorrichtung, des Computerprogramms und des computerlesbaren Speichermediums entsprechen einander. Wenn in dieser Beschreibung daher zum Beispiel eine Ausgestaltung des Verfahrens beschrieben wird, können die Auswertungsvorrichtung, das Computerprogramm und das computerlesbare Speichermedium entsprechend ausgestaltet sein.

Eine Ausgestaltung betrifft auch die Verwendung der bestimmten oberen und unteren Grenze, insbesondere gemäß dem oben beschriebenen Konzept der Regelkarten. Insbesondere wenn zur Qualitätskontrolle eines der genannten zugrunde liegenden Prozesse eine weitere Stichprobe von Messwerten der Messgröße zur Verfügung steht, kann eine Mehrzahl von zweiten Untergruppen aus den Messwerten der weiteren Stichprobe gebildet werden, wobei jede der Mehrzahl von Untergruppen eine Mehrzahl der Messwerte der weiteren Stichprobe aufweist. Für jede der zweiten Untergruppen kann dann ein zweiter Berechnungswert der abgeleiteten Größe berechnet werden. Ferner wird gemäß der Ausgestaltung ermittelt, ob ein Anteil der zweiten Berechnungswerte, der mindestens gleich der vorgegebenen statistischen Wahrscheinlichkeit ist, innerhalb des Wertebereichs liegt, der durch die obere und untere Grenze begrenzt ist. Wenn dies nicht der Fall ist, wird ein Signal ausgegeben, das anzeigt, dass ein Eingriff in den der weiteren Stichprobe zugrunde liegenden Prozess erforderlich ist. Optional gehört auch der Eingriff selbst zu der Ausgestaltung. Mögliche Arten des Eingriffs wurden oben beschrieben.

Insbesondere kann dieselbe Untergruppen-Bildungseinrichtung zur Bildung der Mehrzahl von zweiten Untergruppen verwendet werden, die auch im Zuge der Bestimmung der oberen und der unteren Grenze verwendet wurde. Alternativ oder zusätzlich kann auch dieselbe Berechnungseinrichtung und/oder dieselbe Ermittlungseinrichtung verwendet werden wie bei der Bestimmung der oberen und der unteren Grenze.

Bei der Bestimmung der oberen und der unteren Grenze gibt es in den Fällen, in denen keine der Grenzen lediglich einen einzigen sinnvollen Wert hat, mehrere Kombinationen aus oberer und unterer Grenze, die das oben genannte Kriterium erfüllen, nämlich dass gemäß der zweiten angepassten kontinuierlichen statistischen Verteilung die Berechnungswerte der abgeleiteten Größe mit einem Anteil, der gleich einer vorgegebenen statistischen Wahrscheinlichkeit ist, in dem Wertebereich liegen, der durch die obere und untere Grenze begrenzt ist. Es ist daher bei Stichproben, für die die Werte der abgeleiteten Größe sowohl oberhalb der zu bestimmenden oberen Grenze als auch unterhalb der zu bestimmenden unteren Grenze liegen können, möglich, dass die obere Grenze und die untere Grenze derart bestimmt werden, dass

a) genauso viele Berechnungswerte der abgeleiteten Größe oberhalb der zu bestimmenden oberen Grenze wie unterhalb der zu bestimmenden unteren Grenze liegen oder

b) sich die Anzahl der Berechnungswerte der abgeleiteten Größe oberhalb der zu bestimmenden oberen Grenze und unterhalb der zu bestimmenden unteren Grenze höchstens um eins unterscheidet.

Bevorzugt wird jedoch, dass die obere und die untere Grenze anhand der zweiten angepassten kontinuierlichen statistischen Verteilung bestimmt werden, und zwar derart, dass Werte der abgeleiteten Größe mit derselben Wahrscheinlichkeit oberhalb der oberen Grenze und unterhalb der unteren Grenze liegen. Die Bestimmungseinrichtung der Auswertungsvorrichtung kann entsprechend ausgestaltet sein.

Fälle, in denen eine der Grenzen lediglich einen einzigen sinnvollen Wert hat, führen bei vorgegebener nicht-Eingriffswahrscheinlichkeit zu der eindeutigen Bestimmung der anderen Grenze. In diesen Fällen liegen die Werte der abgeleiteten Größe nicht sowohl oberhalb der zu bestimmenden oberen Grenze als auch unterhalb der zu bestimmenden unteren Grenze. Diese Fälle können insbesondere anhand einer Vorgabe erkannt werden, die in Bezug auf die abgeleitete Größe und die zugrunde liegende Messgröße getroffen wurde. Beispielsweise kann der Betrag der Abweichung von einem Sollwert nicht kleiner als null werden, kann aber beliebig nahe bei null liegen und kann in seltenen Fällen im Rahmen der Messgenauigkeit und Daten-Verarbeitungsgenauigkeit exakt null sein.

Ausführungsbeispiele der Erfindung werden nun unter Bezugnahme auf die beigefügte Zeichnung beschrieben. Die einzelnen Figuren der Zeichnung zeigen:

Fig. 1    eine Anordnung mit einem Koordinatenmessgerät, das einen optischen Messsensor aufweist, in dessen Messbereich ein Werkstück angeordnet ist, wobei die Anordnung außerdem einen mit dem Koordinatenmessgerät verbundenen Computer aufweist,

Fig. 2    schematisch ein Ausführungsbeispiel für eine Vorgehensweise bei der Bestimmung von Eingriffsgrenzen für die Qualitätskontrolle und ein Ausführungsbeispiel für eine Anwendung der zu vorbestimmten Eingriffsgrenzen,

Fig. 3    eine Stichprobe von einhundert Urwerten,

Fig. 4    zwei Diagramme zur schematischen Darstellung der Bildung von Untergruppen aus Urwerten,

Fig. 5    eine diskrete Verteilung von Berechnungswerten einer jeweils aus Untergruppen von Urwerten abgeleiteten Größe und eine angepasste kontinuierliche Verteilung in Form einer Verteilungsdichtefunktion,

Fig. 6    ein Diagramm mit einer unteren und einer oberen Grenze, die in Bezug auf die in Fig. 5 dargestellte angepasste kontinuierliche Verteilung bestimmt wurden, und

Fig. 7    eine Auswertungseinrichtung.

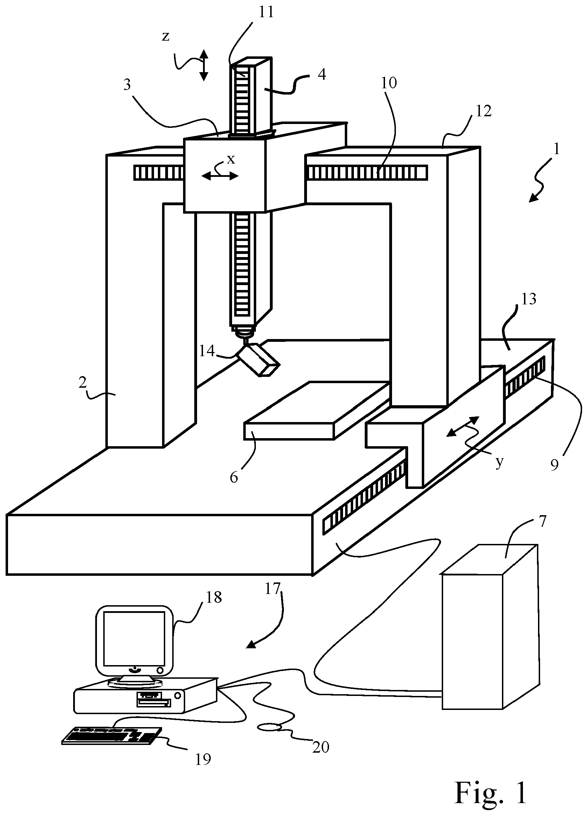

Fig. 1 zeigt ein Koordinatenmessgerät 1 in Portalbauweise. Auf einer Basis 13 des Koordinatenmessgeräts 1 ist ein Werkstück 6 angeordnet, welches unter Verwendung eines optischen Sensors 14, z.B. einer Kamera, vermessen wird. Aufgrund der Portalbauweise ist der optische Sensor 14 relativ zu dem Werkstück 6 beweglich. Alternativ kann statt des optischen Sensors ein taktiler Sensor, zum Beispiel ein Sensor mit einem Taststift vorhanden sein. Das Portal 2 des Koordinatenmessgeräts 1 ist in einer ersten mit y bezeichneten Richtung linear beweglich. Die Position des Portals 2 kann z.B. unter Verwendung eines Maßstabes 9 in der y-Richtung ermittelt werden. An der Traverse 12 des Portals 2 ist ein Schlitten 3 in einer mit x bezeichneten Richtung linear verfahrbar. Die Position des Schlittens 3 relativ zu dem Portal 2 kann z.B. anhand eines Maßstabes 10 bestimmt werden. An dem Schlitten 3 ist wiederum eine Pinole 4 in einer mit z bezeichneten Richtung linear beweglich angeordnet. Der optische Sensor 14 ist am unteren Ende der Pinole 4 angeordnet, vorzugsweise um zumindest eine Drehachse beweglich relativ zur Pinole 4. Die vertikale Position der Pinole 4 und des optischen Sensors 14 kann z.B. anhand eines Maßstabes 11 entlang der Pinole 4 ermittelt werden. Die Richtungen x, y und z bilden ein kartesisches Koordinatensystem.

Wie schematisch rechts unten in Fig. 1 dargestellt ist, ist eine Steuerung 7 des Koordinatenmessgeräts 1 vorgesehen, die die Vermessung des Werkstücks 6 oder anderer Werkstücke steuert und die Sensorsignale und/oder durch Verarbeitung der Sensorsignale erhaltene Messwerte von dem optischen Sensor 14 empfängt und optional aufzeichnet. Alternativ können die Sensorsignale und/oder Messwerte von der Steuerung 7 direkt an einen Computer 17 weitergeleitet werden, der links unten in Fig. 1 schematisch dargestellt ist. Der Computer 17 ist mit einem Bildschirm 18 und zumindest einer Tastatur 19 sowie optional mit weiteren Bedieneinrichtungen wie einer Computermaus 20 ausgestattet. Wie anhand eines Ausführungsbeispiels noch näher ausgeführt wird, kann der Computer 17 ausgestaltet sein, insbesondere durch entsprechend ausgestaltete Software (z. B. ein Computerprogramm), die auf ihm ausgeführt wird, nicht nur Stichproben von Messwerten einer Messgröße auszuwerten und festzustellen, ob ein Eingriff in den zugrunde liegenden Herstellungs- und/oder Bearbeitungsprozess erforderlich ist, sondern diese Auswertung auch vorzubereiten, indem die Eingriffsgrenzen bestimmt werden. Alternativ kann ein anderer Computer die Auswertung vorbereiten.

Die anhand von Fig. 1 beschriebene Ausführungsform mit einem Computer ist lediglich ein Beispiel. In der Praxis kann statt eines lokalen Personal-Computers zum Beispiel ein Computer-Server verwendet werden, auf den mehrere lokale Computer über ein Computer-Netz Zugriff haben. Alternativ oder zusätzlich kann ein Hand-Held-Computer, wie beispielsweise ein Smartphone und/oder ein Tablet-Computer, zur Auswertung der Stichproben und/oder zu deren Vorbereitung verwendet werden. Weitere Beispiele für Computer wurden oben genannt.

Ferner ist die anhand von Fig. 1 beschriebene Ausführungsform bezüglich der Art des Koordinatenmessgeräts lediglich ein Beispiel. Auch diesbezüglich wurden Alternativen bereits oben beschrieben.

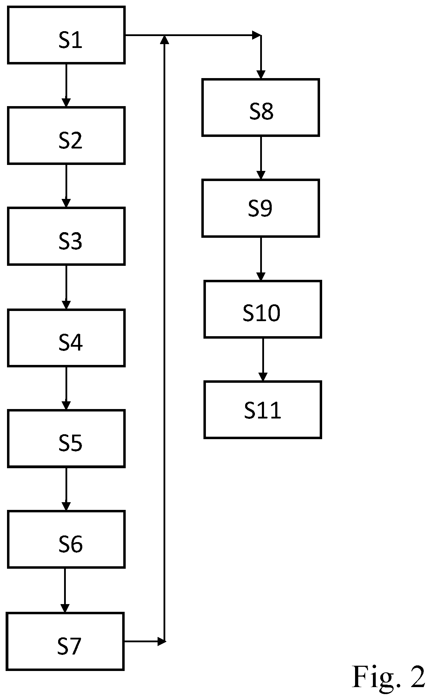

In Fig. 2 zeigt ein Blockdiagramm zur Erläuterung eines Ausführungsbeispiels einer Vorgehensweise bei der Vorbereitung der Bestimmung von Eingriffsgrenzen. In Schritt S1 wird eine Stichprobe von Messwerten einer Messgröße empfangen, zum Beispiel Messwerte des in Fig. 1 dargestellten Koordinatenmessgeräts oder eines anderen Koordinatenmessgeräts. Zum Beispiel hat ein Computer, der die Stichprobe von Messwerten empfängt einen eigenen Datenspeicher, in dem die Messwerte abgespeichert werden. Alternativ kann der Computer auf einen anderen Datenspeicher zugreifen.

In dem folgenden Schritt S2 wird ein Verteilungstyp einer kontinuierlichen statistischen Verteilung an Messwerte der Stichprobe von Messwerten angepasst und wird eine erste angepasste kontinuierliche statistische Verteilung erhalten.

In dem folgenden Schritt S3 wird eine Mehrzahl von synthetischen Werten der Messgröße, die bezüglich der Wahrscheinlichkeit ihres Auftretens der ersten angepassten kontinuierlichen statistischen Verteilung gehorchen, erzeugt. Die erzeugten synthetischen Werte werden abgespeichert, zum Beispiel in einem anderen Bereich desselben Datenspeichers wie die Messwerte der Stichprobe.

In dem folgenden Schritt S4 wird eine Mehrzahl von Untergruppen aus der Gesamtheit der Messwerte und der synthetischen Werte der Messgröße gebildet, wobei jede der Mehrzahl von Untergruppen eine Mehrzahl der Messwerte und/oder der synthetischen Werte der Messgröße aufweist. Dabei wird insbesondere auf den oben erwähnten Datenspeicher zugegriffen. In dem hier beschriebenen Ausführungsbeispiel werden Untergruppen sowohl aus den Messwerten der Stichprobe als auch aus den synthetischen Werten der Messgröße gebildet. Dabei befinden sich in jeder Untergruppe vorzugsweise entweder lediglich Messwerte oder lediglich synthetische Werte.

In dem folgenden Schritt S5 wird für jede der Untergruppen ein Berechnungswert einer abgeleiteten Größe berechnet, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt. Zum Beispiel ist eine erste abgeleitete Größe der Mittelwert der Lage der Messwerte der Untergruppe und ist eine zweite abgeleitete Größe die Streubreite der Lage der Messwerte der Untergruppe. In diesem Fall kann für jede der beiden abgeleiteten Größen jeweils ein Berechnungswertes pro Untergruppe berechnet werden und werden im Folgenden auch für jede der beiden abgeleiteten Größen Eingriffsgrenzen bestimmt.

In dem folgenden Schritt S6 wird (insbesondere für jede der beiden abgeleiteten Größen) ein Verteilungstyp einer kontinuierlichen statistischen Verteilung an die Berechnungswerte der abgeleiteten Größe angepasst und wird eine zweite angepasste kontinuierliche statistische Verteilung erhalten. Wenn die Urwerte beispielsweise von einer Normalverteilung stammen, dann beschreibt der Verteilungstyp der Normalverteilung oftmals gut die Verteilung der Mittelwerte der Lage der Messwerte der Untergruppe und beschreibt der Verteilungstyp der Chi-Quadratverteilung dann auch gut die Verteilung der Varianzen der Berechnungswerte der abgeleiteten Größe der Untergruppe.

In dem folgenden Schritt S7 wird (insbesondere für jede der beiden abgeleiteten Größen) eine obere Grenze und eine untere Grenze eines Wertebereichs von Werten der abgeleiteten Größe derart bestimmt, dass gemäß der zweiten angepassten kontinuierlichen statistischen Verteilung die Berechnungswerte der abgeleiteten Größe mit einem Anteil, der gleich einer vorgegebenen statistischen Wahrscheinlichkeit ist, in dem Wertebereich liegen, der durch die obere und untere Grenze begrenzt ist.

Insbesondere kann in Schritt S7 bei Stichproben, für die die Werte der abgeleiteten Größe sowohl oberhalb der zu bestimmenden oberen Grenze als auch unterhalb der zu bestimmenden unteren Grenze liegen können, die obere Grenze und die untere Grenze anhand der zweiten angepassten kontinuierlichen statistischen Verteilung bestimmt werden, und zwar derart, dass Werte der abgeleiteten Größe innerhalb einer vorgegebenen Toleranz mit derselben Wahrscheinlichkeit oberhalb der oberen Grenze und unterhalb der unteren Grenze liegen

Das Ausführungsbeispiel für das Vorbereiten einer Auswertung von Stichproben von Messwerten einer Messgröße endet mit Schritt S7.

Fig. 2 stellt außerdem ein Ausführungsbeispiel für die Anwendung der bestimmten oberen und unteren Grenze dar. Wenn in Schritt S1 eine Stichprobe von Messwerten einer Messgröße empfangen worden ist, können wie oben beschrieben die Schritte S2 bis S7 ausgeführt werden, oder es werden bestimmte obere und untere Grenzen, d. h. Eingriffsgrenzen, angewendet. Auf den Schritt S1 folgt in diesem Fall Schritt S8, in dem eine Mehrzahl von Untergruppen aus den Messwerten der in Schritt S1 empfangenen Stichprobe gebildet wird, wobei jede der Mehrzahl von Untergruppen eine Mehrzahl der Messwerte der weiteren Stichprobe aufweist. Wenn daher zum Beispiel immer wieder Stichproben von Messwerten empfangen werden, können vereinzelt wieder die Eingriffsgrenzen bestimmt werden. Bei den meisten Stichproben findet jedoch eine Anwendung der zuvor bestimmten Eingriffsgrenzen statt.

Auf den Schritt S8 folgt Schritt S9, in dem für jede der in Schritt S8 gebildeten Untergruppen ein Berechnungswert der abgeleiteten Größe berechnet wird, und optional für zumindest eine zusätzliche abgeleitete Größe jeweils auch ein Berechnungswert berechnet wird. In dem folgenden Schritt S10 wird für jede abgeleitete Größe ermittelt, ob ein Anteil der in Schritt S9 berechneten Berechnungswerte, der mindestens gleich der vorgegebenen statistischen Wahrscheinlichkeit ist, innerhalb des Wertebereichs liegt, der durch die bestimmte obere und untere Grenze begrenzt ist.

Wenn dies nicht der Fall ist, wird in dem folgenden Schritt S11 ein Signal ausgegeben, das anzeigt, dass ein Eingriff in den der weiteren Stichprobe zugrunde liegenden Prozess erforderlich ist. Auf Beispiele für Eingriffe wurde bereits eingegangen.

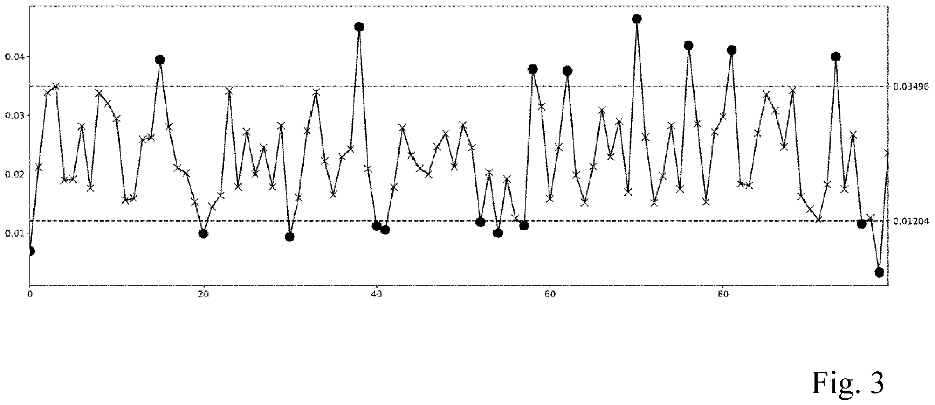

Im Folgenden wird ein Beispiel einer Regelkarte bei einer vorgegebenen nicht-Eingriffswahrscheinlichkeit von 80 Prozent beschrieben. In der Praxis liegen die nicht-Eingriffswahrscheinlichkeiten typischerweise bei höheren Werten, d. h. näher bei 100 Prozent bzw. eins. Die nicht-Eingriffswahrscheinlichkeit von 80 Prozent erlaubt eine anschaulichere bildliche Darstellung eines Ausführungsbeispiels. Fig. 3 zeigt eine Stichprobe von einhundert Urwerten, die durch Kreuze und kleine ausgefüllte Kreise dargestellt sind. Entlang der horizontalen Achse sind die Ordnungszahlen der Urwerte aufgetragen, von 0 bis 99. Entlang der vertikalen Achse sind die Messwerte aufgetragen.

Gemäß der Regelkarte soll die Streuung der Urwerte mithilfe der Spannweite überwacht werden. Um das Ergebnis der Bestimmung der oberen und unteren Grenze der abgeleiteten Größe vorwegzunehmen, werden die Eingriffsgrenzen 0,01368 (untere Grenze) und 0,03431 (obere Grenze) bestimmt. Auf Höhe dieser Werte befinden sich in Fig. 3 gestrichelte horizontale Linien. Die darunter und darüber liegenden Messwerte bzw. Urwerte sind mit den kleinen ausgefüllten Kreisen dargestellt. Die innerhalb der Grenzen liegenden Werte sind durch Kreuze dargestellt.

Der Messprozess, durch den die Urwerte erhalten werden, kann fortgesetzt werden, d. h die Anzahl der Urwerte ist nicht auf einhundert begrenzt. Dies gilt sowohl in Bezug auf die Bestimmung der oberen und unteren Grenze als Eingriffsgrenzen als auch für die Anwendung der bestimmten oberen und unteren Grenze zur Prozesskontrolle.

Nach der Bestimmung der oberen und der unteren Grenze werden von den Urwerten Untergruppen gebildet, für die als abgeleitete Größe jeweils die Spannweite der Urwerte in der Untergruppe berechnet wird. Es sollen nun in dem Beispiel gemäß der vorgegebenen nicht-Eingriffswahrscheinlichkeit 80 Prozent der auftretenden Spannweiten zwischen 0,01368 und 0,03431 liegen. Dies ist dann zu erwarten, wenn sich der zugrundeliegende Prozess nicht verändert. Wenn ein größerer Prozentsatz der berechneten Spannweiten als eins abzüglich der nicht-Eintrittswahrscheinlichkeit, d. h. im vorliegenden Fall von mehr als 20 Prozent, außerhalb der Eingriffsgrenzen liegt, soll eingegriffen werden. Dies kann als Hinweis darauf angesehen werden, dass sich der Prozess verändert hat. Z. B. soll eine Person einschreiten und untersuchen, warum es zu der abweichenden Spannweite kam. Wie bereits erwähnt kann in der Praxis die nicht-Eintrittswahrscheinlichkeit nahe bei eins liegen. In diesem Fall kann z. B. bei jedem einzelnen Wert der Spannweite, der außerhalb des Bereichs der oberen und unteren Grenze liegt, ein Hinweis generiert werden, dass sich der Prozess möglicherweise verändert hat.

Im Folgenden wird nun auch durch Wiedergabe von Formeln ein Ausführungsbeispiel der Bestimmung der Eingriffsgrenzen beschrieben.

Gegeben sei eine Stichprobe $S$ von Messwerten x einer Messgröße, d.h. die Menge der Urwerte: $S = \{x_1, \ldots, x_n\}$. Es sind gemäß der Indizierung $n$ Urwerte vorhanden, wobei $n$ eine ganze positive Zahl ist. Es wird die Verteilung einer von der Stichprobe abgeleiteten Größe in Bezug auf eine Anzahl $k$ von Unterstichproben gebildet, wobei auch $k$ eine ganze positive Zahl ist. Es können folgende Schritte ausgeführt werden:

    1. Berechnen der abgeleiteten Größe durch Untergruppierung der Stichprobe der Urwerte die Stichprobe

$$S \to M = \{r_1, \ldots, r_{\lfloor n/k \rfloor}\} \, .$$

    Dabei ist $M$ die Menge der Werte $r$ der aus den Untergruppen abgeleiteten Größe mit der Anzahl $\lfloor n/k \rfloor$, wobei:

$$\lfloor y \rfloor := \max\{k \in \mathbb{Z}; k \le \mathrm{y}\}.$$

    Die Bildung der Untergruppen der Messwerte kann alternativ später in Schritt 4 durchgeführt werden, oder auch entfallen.

    2. Anpassen eines Verteilungstyps einer kontinuierlichen statistischen Verteilung an die Stichprobe der Urwerte. Dazu ist z. B. eine Verteilungsklasse $D_X(p)$ vorgegeben, wobei die Verteilungen dieser Klasse über eine oder mehrere Parameter $p \in \mathbb{R}^m \ (m \in \mathbb{N})$ bestimmt sind (z.B. Klasse der Normalverteilungen mit den Parametern Mittelwert und Standardabweichung). Die Verteilung wird durch Anpassung der Parameter an die Stichprobe $S$ bestimmt. Dadurch wird eine angepasste kontinuierliche Verteilung $\hat{D}_X$ mit den geschätzten (angepassten) Parametern $\hat{p}$ erhalten.

3. Erzeugen einer Stichprobe

$$S_{neu} = \{x_{n+1}, \dots\},$$

von hinreichender Größe, welche gemäß $\hat{D}_X$ verteilt sind, unter Verwendung eines Pseudozufallszahlen-Generators. An den Indizes $n + 1, \dots$ ist erkennbar, dass sich die Gesamt-Anzahl der Werte der Messgröße um die berechneten synthetischen Werte vergrößert.

4. Bildung von Untergruppen aus der Stichprobe $S_{neu}$ (die optional auch die Urwerte aufweist) durch Untergruppierung und Berechnen von Werten der abgeleiteten Größe, sodass eine Stichprobe der abgeleiteten Größe entsteht

$$S_{neu} \rightarrow M_{neu} = \{r_{\lfloor n/k \rfloor + 1}, \dots\}$$

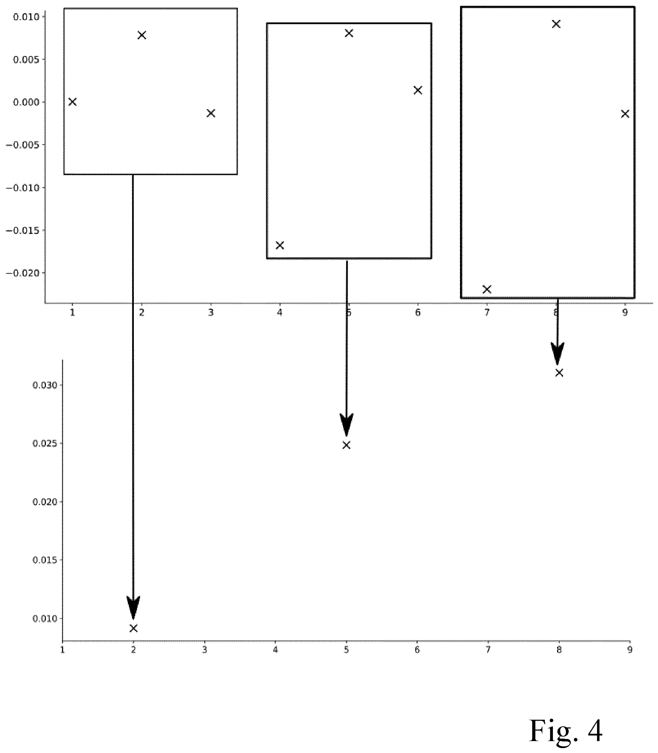

In Fig. 4 ist im oberen Teil der Figur eine Anzahl von neun Urwerten dargestellt. In dem Ausführungsbeispiel werden jeweils drei Urwerte, d.h. die Urwerte mit den Ordnungszahlen 1 bis 3, 4 bis 6 und 7 bis 9, zu einer Untergruppe gruppiert, wie durch jeweils einen rechteckigen Rahmen dargestellt. Ferner sind in dem Diagramm im unteren Teil der Figur entsprechende Werte einer abgeleiteten Größe für jede der Untergruppen dargestellt. Daher führt von jeder der Untergruppen im oberen Diagramm ein Pfeil nach unten zu einem Wert der abgeleiteten Größe.

5. Anpassen eines Verteilungstyps einer kontinuierlichen statistischen Verteilung an die Berechnungswerte der abgeleiteten Größe und Erhalt einer zweiten angepassten kontinuierlichen statistischen Verteilung. Dazu ist z. B. wiederum eine Verteilungsklasse vorgegeben (z.B. eine Verteilung mit vier Parametern, wie Mittelwert, Standardabweichung, Schiefe und Kurtosis). Man erhält nun die geschätzte, angepasste Verteilung $\hat{D}_R$ der Werte der abgeleiteten Größen, welche z. B. die gesamte Stichprobe

$$M_{gesamt} = \{\underbrace{r_1, \dots, r_{\lfloor \frac{n}{k} \rfloor}}_{M}, \underbrace{r_{\lfloor \frac{n}{k} \rfloor + 1}, \dots}_{M_{neu}}\}$$

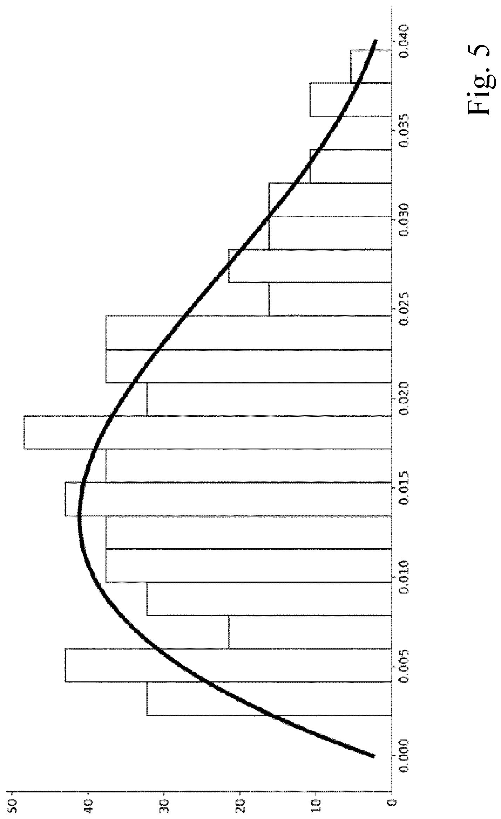

beschreibt, wenn sowohl die Untergruppen aus den Urwerten und aus den synthetischen Werten berücksichtigt wurden. Alternativ können zum Beispiel lediglich die Untergruppen der synthetischen Werte berücksichtigt werden. Fig. 5 zeigt für ein Ausführungsbeispiel die in Balkenform dargestellte Häufigkeit der Berechnungswerte der abgeleiteten Größe und - durch eine Linie dargestellt - die Verteilungsdichtefunktion der angepassten kontinuierlichen statistischen Verteilung.

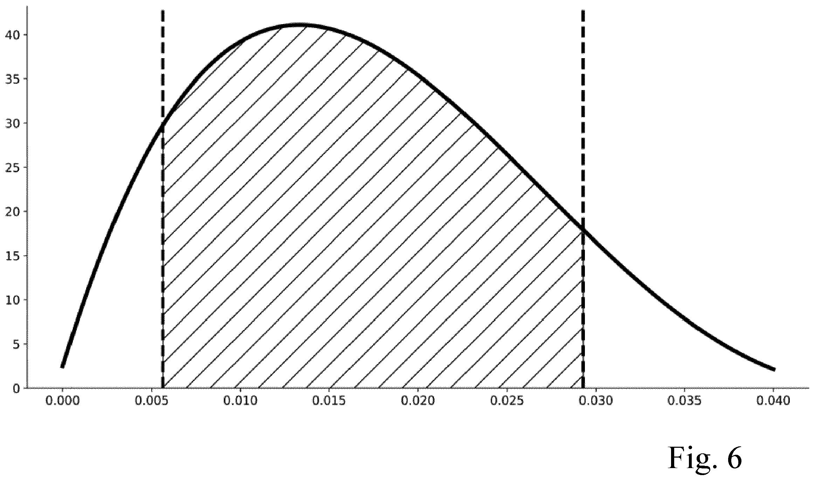

6. Bestimmen der Eingriffsgrenzen, d. h. der oberen und der unteren Grenze, aus der angepassten kontinuierlichen Verteilung $\hat{D}_R$. Fig. 6 zeigt in einer anderen Skalierung der vertikalen Achse die angepasste kontinuierliche statistische Verteilung aus Fig. 5. Außerdem sind in der Fig. 6 die bestimmten Eingriffsgrenzen (untere und obere Grenze) für die abgeleitete Größe als gestrichelte vertikale Linien dargestellt. Es handelt sich bei der abgeleiteten Größe z. B. um eine Lagegröße.

Auf diese Weise wird das Problem der kleinen Stichprobengröße bei der Verteilungsanpassung in Bezug auf die abgeleitete Größe gelöst.

Im Folgenden wird nun ein Beispiel für die Berechnung der oberen und der unteren Grenze bzw. der Eingriffsgrenzen mit Wiedergabe von Formeln erläutert.

$f$ sei die (kontinuierliche) Wahrscheinlichkeitsdichtefunktion der angepassten Verteilung, also die Verteilung von der ausgegangen wird, dass sie die abgeleitete Zufallsgröße $R$ gut beschreibt. Dann ist das Integral

$$F(x) := \int_{-\infty}^{x} f(y) \, dy$$

die zugehörige Verteilungsfunktion $F$ von der Zufallsgröße $R$. Sie beschreibt die Wahrscheinlichkeit, dass $R$ einen Wert kleiner oder gleich $x$ annimmt, also

$$F(x) = P(R \leq x).$$

Ist nun eine Wahrscheinlichkeit $p \in (0,1)$ vorgegeben, dann wird die reelle Zahl $x_p$, für die gilt, dass die Wahrscheinlichkeit, dass die Zufallsgröße $R$ kleiner oder gleich diesem Wert $x_p$ ist, dem Wert $p$ entspricht, in Formeln

$$P(R \leq x_p) = p, \qquad (1)$$

als das p-Quantil der Verteilung von *R* bezeichnet. Dies lässt sich auch mit der Verteilungsdichtefunktion schreiben, nämlich

$$F(x_p) = \int_{-\infty}^{x} f(y)\, dy \quad = p.$$

Nicht für jeden Verteilungstyp gibt es eine Funktion, die einer Wahrscheinlichkeit *p* das Quantil $x_p$ zuordnet (sogenannte Quantilfunktion). Existiert jedoch für die Verteilungsdichtefunktion die Umkehrfunktion, so ist das p-Quantil der Verteilung mittels der Umkehrfunktion ermittelbar. Wenn die Quantilfunktion nicht geschlossen darstellbar ist, wie z. B. bei der Normalverteilung, können numerische Verfahren zur Bestimmung der Quantile angewendet werden.

Sei nun $c \in (0,1)$ die vorgegebene nicht-Eingriffswahrscheinlichkeit, dann werden im Folgenden zwei Fälle betrachtet:

1. Die Grenzen sollen derart bestimmt werden, dass die Werte der Zufallsgröße *R* mit derselben Wahrscheinlichkeit sowohl oberhalb der oberen Grenze *u* als auch unterhalb der unteren Grenze *l* liegen und in Summe mit einer Wahrscheinlichkeit von (1 - *c*) außerhalb der Grenzen liegen.

2. Es gibt nur eine zu bestimmende Grenze und die soll in dem hier beschriebenen Beispiel derart als obere Grenze bestimmt werden, dass die Werte der Zufallsgröße R mit einer Wahrscheinlichkeit von (1 - *c*) oberhalb der oberen Grenze *u* liegen.

Im Fall 1. ist die genannte Forderung dann erfüllt, wenn

$$P(R \le l) = P(R \ge u) = \frac{1-c}{2}.$$

Dies bedeutet, dass die untere Grenze *l* das (1 - *c*)/2 - Quantil und die obere Grenze *u* das (1 + *c*)/2 Quantil der Verteilung der Zufallsgröße *R* sind.

Im Fall 2. muss gelten

$$P(R \ge u) = c.$$

In diesem Fall ist die obere Grenze *u* das *c* - Quantil der Verteilung der Zufallsgröße *R*.

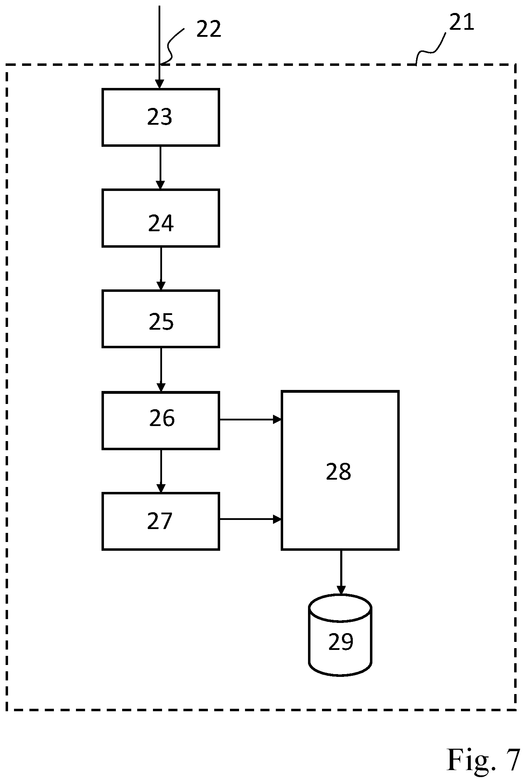

Fig. 7 zeigt eine Auswertungsvorrichtung 21 zur Verarbeitung von Stichproben von Messwerten einer Messgröße aus einer Vermessung einer Vielzahl von Werkstücken durch ein oder mehrere Koordinatenmessgeräte, z. B. durch das in Fig. 1 dargestellte Koordinatenmessgerät 1. Bei der Auswertungsvorrichtung 21 kann es sich z. B. um den Computer 17 der Anordnung aus Fig. 1 handeln. Die im Folgenden beschriebenen Einrichtungen der Auswertungsvorrichtung 21 können insbesondere durch ein Computerprogramm realisiert werden, das auf dem Computer ausgeführt wird.

Die Auswertungsvorrichtung 21 weist eine Messwert-Schnittstelle 22 zum Empfangen von Messwerten einer Stichprobe von Messwerten auf. Eine erste Anpassungseinrichtung 23 der Auswertungsvorrichtung 21, die mit der Messwert-Schnittstelle 22 verbunden ist, ist ausgestaltet, einen Verteilungstyp einer kontinuierlichen statistischen Verteilung an Messwerte einer Stichprobe von Messwerten anzupassen. Hierdurch wird eine erste angepasste kontinuierliche statistische Verteilung erhalten.

Eine Erzeugungseinrichtung 24 der Auswertungsvorrichtung 21 ist mit der ersten Anpassungseinrichtung 23 verbunden und ist ausgestaltet, eine Mehrzahl von synthetischen Werten der Messgröße zu erzeugen, die bezüglich der Wahrscheinlichkeit ihres Auftretens der ersten angepassten kontinuierlichen statistischen Verteilung gehorchen.

Ferner weist die Auswertungsvorrichtung 21 eine Untergruppen-Bildungseinrichtung 25 auf, die mit der Erzeugungseinrichtung 24 verbunden ist und die ausgestaltet ist, eine Mehrzahl von Untergruppen aus der Gesamtheit der Messwerte und der synthetischen Werte der Messgröße zu bilden, wobei jede der Mehrzahl von Untergruppen eine Mehrzahl der Messwerte und/oder der synthetischen Werte der Messgröße aufweist.

Eine Berechnungseinrichtung 26 der Auswertungsvorrichtung 21 ist mit der Untergruppen-Bildungseinrichtung 25 verbunden und ist ausgestaltet, für jede der Untergruppen einen Berechnungswert einer abgeleiteten Größe zu berechnen, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt.

Eine zweite Anpassungseinrichtung 27, deren Funktion optional auch die erste der Anpassungseinrichtung 23 ausführbar ist, sodass lediglich eine Anpassungseinrichtung Teil der Auswertungsvorrichtung 21 ist, ist mit der Berechnungseinrichtung 26 verbunden. Die zweite Anpassungseinrichtung 27 ist ausgestaltet, einen Verteilungstyp einer kontinuierlichen statistischen Verteilung an die Berechnungswerte der abgeleiteten Größe anzupassen und eine zweite angepasste kontinuierliche statistische Verteilung zu erhalten.

Ferner ist eine Bestimmungseinrichtung 28 der Auswertungsvorrichtung 21 mit der zweiten Anpassungseinrichtung 27 verbunden und ausgestaltet, eine obere Grenze und eine untere Grenze eines Wertebereichs von Werten der abgeleiteten Größe derart zu bestimmen, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist.

Die Bestimmungseinrichtung 28 kann die untere Grenze und die obere Grenze in einem Datenspeicher 29 der Auswertungsvorrichtung 21 speichern.

Liste der Bezugszeichen in den Figuren:

1     Koordinatenmessgerät
2     Portal
3     Schlitten
4     Pinole
6     Werkstück
9     Maßstab
10    Maßstab
11    Maßstab
12    Traverse
13    Basis
14    optischer Sensor
17    Computer
18    Bildschirm
19    Tastatur
20    Computermaus
21    Auswertungseinrichtung
22    Messwert-Schnittstelle
23    erste Anpassungseinrichtung
24    Erzeugungseinrichtung
25    Untergruppen-Bildungseinrichtung
26    Berechnungseinrichtung
27    zweite Anpassungseinrichtung
28    Bestimmungseinrichtung
29    Datenspeicher

**Patentansprüche**

1.   Computerimplementiertes Verfahren zum Vorbereiten einer Auswertung von Stichproben von Messwerten einer Messgröße aus einer Vermessung einer Vielzahl von Werkstücken durch ein oder mehrere Koordinatenmessgeräte (1), mit folgenden Schritten

     - Anpassung eines Verteilungstyps einer kontinuierlichen statistischen Verteilung an Messwerte einer Stichprobe von Messwerten und Erhalt einer ersten angepassten kontinuierlichen statistischen Verteilung (S2),
     - Erzeugung einer Mehrzahl von synthetischen Werten der Messgröße, die bezüglich der Wahrscheinlichkeit ihres Auftretens der ersten angepassten kontinuierlichen statistischen Verteilung gehorchen (S3),
     - Bildung einer Mehrzahl von Untergruppen aus der Gesamtheit der Messwerte und der synthetischen Werte der Messgröße, wobei jede der Mehrzahl von Untergruppen eine Mehrzahl der Messwerte und/oder der synthetischen Werte der Messgröße aufweist (S4),

     - für jede der Untergruppen Berechnung eines Berechnungswertes einer abgeleiteten Größe, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt (S5),
     - Anpassung eines Verteilungstyps einer kontinuierlichen statistischen Verteilung an die Berechnungswerte der abgeleiteten Größe und Erhalt einer zweiten angepassten kontinuierlichen statistischen Verteilung (S6),
     - Bestimmung einer oberen Grenze und einer unteren Grenze eines Wertebereichs von Werten der abgeleiteten Größe derart, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist (S7).

2.   Verfahren nach Anspruch 1, wobei für zumindest eine weitere Stichprobe von Messwerten der Messgröße

     - eine Mehrzahl von zweiten Untergruppen aus den Messwerten der weiteren Stichprobe gebildet wird, wobei jede der Mehrzahl von Untergruppen eine Mehrzahl der Messwerte der weiteren Stichprobe aufweist,
     - für jede der zweiten Untergruppen ein zweiter Berechnungswert der abgeleiteten Größe berechnet wird,
     - ermittelt wird, ob ein Anteil der zweiten Berechnungswerte, der mindestens gleich der vorgegebenen statistischen Wahrscheinlichkeit ist, innerhalb des Wertebereichs liegt, der durch die obere und untere Grenze begrenzt ist, und, wenn dies nicht der Fall ist,
     - Ausgabe eines Signals, das anzeigt, dass ein Eingriff in den der weiteren Stichprobe zugrunde liegenden Prozess erforderlich ist.

3.   Verfahren nach Anspruch 1 oder 2, wobei bei Stichproben, für die die Werte der abgeleiteten Größe sowohl oberhalb der zu bestimmenden oberen Grenze als auch unterhalb der zu bestimmenden unteren Grenze liegen können, die obere Grenze und die untere Grenze anhand der zweiten angepassten kontinuierlichen statistischen Verteilung bestimmt werden, und zwar derart, dass Werte der abgeleiteten Größe innerhalb einer vorgegebenen Toleranz mit derselben Wahrscheinlichkeit oberhalb der oberen Grenze und unterhalb der unteren Grenze liegen.

**4.** Auswertungsvorrichtung (21) zur Verarbeitung von Stichproben von Messwerten einer Messgröße aus einer Vermessung einer Vielzahl von Werkstücken durch ein oder mehrere Koordinatenmessgeräte (1), wobei die Auswertungsvorrichtung (21) aufweist:

- eine Messwert-Schnittstelle (22) zum Empfangen von Messwerten einer Stichprobe von Messwerten,
- eine erste Anpassungseinrichtung (23), die mit der Messwert-Schnittstelle (22) verbunden ist und die ausgestaltet ist, einen Verteilungstyp einer kontinuierlichen statistischen Verteilung an Messwerte einer Stichprobe von Messwerten anzupassen und eine erste angepasste kontinuierliche statistische Verteilung zu erhalten,
- eine Erzeugungseinrichtung (24), die mit der ersten Anpassungseinrichtung (23) verbunden ist und die ausgestaltet ist, eine Mehrzahl von synthetischen Werten der Messgröße zu erzeugen, die bezüglich der Wahrscheinlichkeit ihres Auftretens der ersten angepassten kontinuierlichen statistischen Verteilung gehorchen,
- eine Untergruppen-Bildungseinrichtung (25), die mit der Erzeugungseinrichtung (24) verbunden ist und die ausgestaltet ist, eine Mehrzahl von Untergruppen aus der Gesamtheit der Messwerte und der synthetischen Werte der Messgröße zu bilden, wobei jede der Mehrzahl von Untergruppen eine Mehrzahl der Messwerte und/oder der synthetischen Werte der Messgröße aufweist,
- eine Berechnungseinrichtung (26), die mit der Untergruppen-Bildungseinrichtung (25) verbunden ist und die ausgestaltet ist, für jede der Untergruppen einen Berechnungswert einer abgeleiteten Größe zu berechnen, nämlich einer Lagegröße, die eine Lage der Messwerte und/oder der synthetischen Werte der Messgröße der Untergruppe beschreibt, oder einer Streuungsgröße, die die Streuung der Messwerte und/oder der synthetischen Werte der Messgröße der Untergruppe beschreibt,
- eine zweite Anpassungseinrichtung (27), die mit der Berechnungseinrichtung (26) verbunden ist und die ausgestaltet ist, einen Verteilungstyp einer kontinuierlichen statistischen Verteilung an die Berechnungswerte der abgeleiteten Größe anzupassen und eine zweite angepasste kontinuierliche statistische Verteilung zu erhalten,
- eine Bestimmungseinrichtung (28), die mit der Berechnungseinrichtung (26) und der zweiten Anpassungseinrichtung (27) verbunden ist und die ausgestaltet ist, eine obere Grenze und eine untere Grenze eines Wertebereichs von Werten der abgeleiteten Größe derart zu bestimmen, dass gemäß der zweiten angepassten kontinuierlichen statistischen Verteilung Werte der abgeleiteten Größe mit einem Anteil, der gleich einer vorgegebenen statistischen Wahrscheinlichkeit ist, in dem Wertebereich liegen, der durch die obere und untere Grenze begrenzt ist.

**5.** Auswertungsvorrichtung nach dem vorhergehenden Anspruch, wobei die Untergruppen-Bildungseinrichtung ferner ausgestaltet ist, eine Mehrzahl von zweiten Untergruppen aus den Messwerten einer weiteren Stichprobe zu bilden, wobei jede der Mehrzahl von Untergruppen eine Mehrzahl der Messwerte der weiteren Stichprobe aufweist,

wobei die Berechnungseinrichtung ferner ausgestaltet ist, für jede der zweiten Untergruppen einen zweiten Berechnungswert der abgeleiteten Größe zu berechnen, wobei die Auswertungsvorrichtung eine Ermittlungseinrichtung aufweist, die mit der Berechnungseinrichtung verbunden ist und die ausgestaltet ist zu ermitteln, ob ein Anteil der zweiten Berechnungswerte, der mindestens gleich der vorgegebenen statistischen Wahrscheinlichkeit ist, innerhalb des Wertebereichs liegt, der durch die obere und untere Grenze begrenzt ist, und, wenn dies nicht der Fall ist, ein Signal zu erzeugen und auszugeben, das anzeigt, dass ein Eingriff in den der weiteren Stichprobe zugrunde liegenden Prozess erforderlich ist.

**6.** Auswertungsvorrichtung nach Anspruch 5 oder 6, wobei die Bestimmungseinrichtung in Bezug auf Stichproben, für die die Werte der abgeleiteten Größe sowohl oberhalb der zu bestimmenden oberen Grenze als auch unterhalb der zu bestimmenden unteren Grenze liegen können, ausgestaltet ist die obere Grenze und die untere Grenze derart zu bestimmen, dass genauso viele Berechnungswerte der abgeleiteten Größe oberhalb der zu bestimmenden oberen Grenze wie unterhalb der zu bestimmenden unteren Grenze liegen, oder sich die Anzahl der Berechnungswerte der abgeleiteten Größe oberhalb der zu bestimmenden oberen Grenze und unterhalb der zu bestimmenden unteren Grenze höchstens um eins unterscheidet.

**7.** Computerprogramm, aufweisend Befehle, die bei Ausführung des Computerprogramms durch einen Computer oder durch eine Anordnung von Computern diesen oder diese veranlassen, das Verfahren gemäß einem der vorhergehenden Verfahrensansprüche auszuführen.

**8.** Computerlesbares Speichermedium, aufweisend Befehle, die bei Ausführung durch einen Computer oder durch eine Anordnung von Computern diesen oder diese veranlassen, das Verfahren nach einem der vorhergehenden Verfahrensansprüche auszuführen.

**Claims**

1. Computer-implemented method for preparing an evaluation of samples of measured values of a measured variable from a measurement of a plurality of workpieces by way of one or more coordinate measuring units (1), comprising the following steps:

   - matching a distribution type of a continuous statistical distribution to measured values of a sample of measured values and obtaining a first matched continuous statistical distribution (S2),
   - generating a plurality of synthetic values of the measured variable which conform to the first matched continuous statistical distribution in relation to the probability of them arising (S3),
   - forming a plurality of subgroups from the entirety of the measured values and the synthetic values of the measured variable, wherein each of the plurality of subgroups has a plurality of measured values and/or the synthetic values of the measured variable (S4),
   - calculating for each of the subgroups a calculation value of a derived variable, specifically a position variable, which describes a position of the measured values and/or the synthetic values of the measured variable of the subgroup, or a scatter variable, which describes the scattering of the measured values and/or the synthetic values of the measured variable of the subgroup (S5),
   - matching a distribution type of a continuous statistical distribution to the calculation values of the derived variable and obtaining a second matched continuous statistical distribution (S6),
   - determining an upper limit and a lower limit of a value range of values of the derived variable in such a way that, in accordance with the second matched continuous statistical distribution, a proportion of the values of the derived variable equal to a predefined statistical probability are within the value range which is limited by the upper and lower limit (S7).

2. Method according to Claim 1, wherein, for at least one other sample of measured values of the measured variable,

   - a plurality of second subgroups are formed from the measured values of the other sample, wherein each of the plurality of subgroups has a plurality of measured values of the other sample,
   - a second calculation value of the derived variable is calculated for each of the second subgroups,
   - it is identified whether a proportion of the second calculation variables which is at least equal to the predefined statistical probability are within the value range which is limited by the upper and lower limit and, if this is not the case,
   - a signal indicating the need for intervention in the process on which the other sample is based is output.

3. Method according to Claim 1 or 2, wherein, for samples for which the values of the derived variable may be both above the upper limit to be determined as well as below the lower limit to be determined, the upper limit and the lower limit are determined based on the second matched continuous statistical distribution and specifically in such a way that values of the derived variable are above the upper limit and below the lower limit within a predefined tolerance with the same probability.

4. Evaluation apparatus (21) for processing samples of measured values of a measured variable from a measurement of a plurality of workpieces by way of one more coordinate measuring units (1), wherein the evaluation apparatus (21) comprises:

   - a measured value interface (22) for receiving measured values of a sample of measured values,
   - a first matching device (23) connected to the measured value interface (22) and designed to match a distribution type of a continuous statistical distribution to measured values of a sample of measured values and to obtain a first matched continuous statistical distribution,
   - a generation device (24) connected to the first matching device (23) and designed to generate a plurality of synthetic values of the measured variable which conform to the first matched continuous statistical distribution in relation to the probability of them arising,
   - a subgroup formation device (25) connected to the generation device (24) and designed to form a plurality of subgroups from the entirety of the measured values and the synthetic values of the measured variable, wherein each of the plurality of subgroups has a plurality of measured values and/or synthetic values of the measured variable,
   - a calculation device (26) connected to the subgroup formation device (25) and designed to calculate for each of the subgroups a calculation value of a derived variable, specifically a position variable, which describes a position of the measured values and/or the synthetic values of the measured variable of the subgroup, or a scatter variable, which describes the scattering of the measured values and/or the synthetic values of the measured variable of the subgroup,
- a second matching device (27) connected to the calculation device (26) and designed to match a distribution type of a continuous statistical distribution to the calculation values of the derived variable and to obtain a second matched continuous statistical distribution,
- a determination device (28) connected to the calculation device (26) and the second matching device (27) and designed to determine an upper limit and a lower limit of a value range of values of the derived variable in such a way that, in accordance with the second matched continuous statistical distribution, a proportion of the values of the derived variable equal to a predefined statistical probability are within the value range which is limited by the upper and lower limit.

5. Evaluation apparatus according to the preceding claim, wherein the subgroup formation device is also designed to form a plurality of second subgroups from the measured values of another sample, wherein each of the plurality of subgroups has a plurality of the measured values of the other sample,

wherein the calculation device is also designed to calculate a second calculation value of the derived variable for each of the second subgroups,
wherein the evaluation apparatus has an identification device connected to the calculation device and designed to identify whether a proportion of the second calculation values which is at least equal to the predefined statistical probability are within the value range which is limited by the upper and lower limit and, if this is not the case, to generate and output a signal indicating a need for intervention in the process on which the other sample is based.

6. Evaluation apparatus according to Claim 5 or 6, wherein the determination device is designed, in relation to samples for which the values of the derived variable may be both above the upper limit to be determined as well as below the lower limit to be determined, to determine the upper limit and the lower limit in such a way that exactly as many calculation values of the derived variable are above the upper limit to be determined as below the lower limit to be determined, or the number of calculation values of the derived variable above the upper limit to be determined and below the lower limit to be determined differs by no more than one.

7. Computer program comprising commands which, when the computer program is executed by a computer or by an arrangement of computers, prompt said computer or arrangement of computers to execute the method according to one of the preceding method claims.

8. Computer-readable storage medium comprising commands which, when the computer program is executed by a computer or by an arrangement of computers, prompt said computer or arrangement of computers to execute the method according to one of the preceding method claims.

## Revendications

1. Procédé informatisé de préparation d'une évaluation d'échantillons de valeurs de mesure d'une grandeur de mesure à partir d'une mesure d'un grand nombre de pièces par une ou plusieurs unités de mesure de coordonnées (1), ledit procédé comprenant les étapes suivantes :

- adapter un type de distribution d'une distribution statistique continue à des valeurs de mesure d'un échantillon de valeurs de mesure et obtenir une première distribution statistique continue adaptée (S2),
- générer une pluralité de valeurs synthétiques de la grandeur de mesure qui obéissent à la première distribution statistique continue adaptée en ce qui concerne la probabilité de leur survenance (S3),
- former une pluralité de sous-groupes à partir de la totalité des valeurs de mesure et des valeurs synthétiques de la grandeur de mesure, chaque sous-groupe de la pluralité de sous-groupes comportant une pluralité de valeurs de mesure et/ou de valeurs synthétiques de la grandeur de mesure (S4),
- pour chacun des sous-groupes, calculer une valeur de calcul d'une grandeur dérivée, à savoir une grandeur de position, qui décrit une position des valeurs de mesure et/ou des valeurs synthétiques de la grandeur de mesure du sous-groupe, ou une grandeur de dispersion qui décrit la dispersion des valeurs de mesure et/ou des valeurs synthétiques de la grandeur de mesure du sous-groupe (S5),
- adapter un type de distribution d'une distribution statistique continue aux valeurs de calcul de la grandeur dérivée et obtenir une deuxième distribution statistique continue adaptée (S6),
- déterminer une limite supérieure et une limite inférieure d'une zone de valeurs de la grandeur dérivée de manière que, selon la deuxième distribution statistique continue adaptée, des valeurs de la grandeur dérivée se situent, avec une proportion qui est égale à une probabilité statistique spécifiée, dans la zone de valeurs qui est limitée par les limites supérieure et inférieure (S7).

2. Procédé selon la revendication 1, pour au moins un autre échantillon de valeurs de mesure de la grandeur de mesure

   - une pluralité de deuxièmes sous-groupes étant formés à partir des valeurs de mesure de l'autre échantillon, chaque sous-groupe de la pluralité de sous-groupes comportant une pluralité de valeurs de mesure de l'autre échantillon,
   - une deuxième valeur de calcul de la grandeur dérivée étant calculée pour chacun des deuxièmes sous-groupes,
   - une détermination étant effectuée pour savoir si une proportion des deuxièmes valeurs de calcul, qui est au moins égale à la probabilité statistique spécifiée, se situe dans la plage de valeurs limitée par les limites supérieure et inférieure, et si ce n'est pas le cas,
   - délivrer un signal qui indique qu'une intervention dans le processus à la base de l'autre échantillon est nécessaire.

3. Procédé selon la revendication 1 ou 2, pour les échantillons pour lesquels les valeurs de la grandeur dérivée peuvent se situer aussi bien au-dessus de la limite supérieure à déterminer qu'au-dessous de la limite inférieure à déterminer, la limite supérieure et la limite inférieure étant déterminées sur la base de la deuxième distribution statistique continue adaptée, c'est-à-dire de manière que des valeurs de la grandeur dérivée se situent dans une tolérance spécifiée avec la même probabilité au-dessus de la limite supérieure et au-dessous de la limite inférieure.

4. Dispositif d'évaluation (21) destiné à traiter des échantillons de valeurs de mesure d'une grandeur de mesure à partir d'une mesure d'un grand nombre de pièces par une ou plusieurs unités de mesure de coordonnées (1), le dispositif d'évaluation (21) comportant :

   - une interface de valeurs de mesure (22) destinée à recevoir des valeurs de mesure d'un échantillon de valeurs de mesure,
   - un premier module d'adaptation (23) qui est relié à l'interface de valeurs de mesure (22) et qui est conçu pour adapter un type de distribution d'une distribution statistique continue à des valeurs de mesure d'un échantillon de valeurs de mesure et pour obtenir une première distribution statistique continue adaptée,
   - un module de génération (24) qui est relié au premier module d'adaptation (23) et qui est conçu pour générer une pluralité de valeurs synthétiques de la grandeur de mesure qui obéissent à la première distribution statistique continue adaptée en ce qui concerne la probabilité de leur survenance,
   - un module de formation de sous-groupes (25) qui est relié au module de génération (24) et qui est adapté pour former une pluralité de sous-groupes à partir de la totalité des valeurs de mesure et des valeurs synthétiques de la grandeur de mesure, chaque sous-groupe de la pluralité de sous-groupes comportant une pluralité de valeurs de mesure et/ou de valeurs synthétiques de la grandeur de mesure,
   - un module de calcul (26) qui est relié au module de formation de sous-groupes (25) et qui est conçu pour calculer une valeur de calcul d'une grandeur dérivée pour chacun des sous-groupes, c'est-à-dire d'une grandeur de position qui décrit une position des valeurs de mesure et/ou des valeurs synthétiques de la grandeur de mesure du sous-groupe, ou d'une grandeur de dispersion qui décrit la dispersion des valeurs de mesure et/ou des valeurs synthétiques de la grandeur de mesure du sous-groupe,
   - un deuxième module d'adaptation (27) qui est relié au module de calcul (26) et qui est conçu pour adapter un type de distribution d'une distribution statistique continue aux valeurs de calcul de la grandeur dérivée et pour obtenir une deuxième distribution statistique continue adaptée,
   - un module de détermination (28) qui est relié au module de calcul (26) et au deuxième module d'adaptation (27) et qui est conçu pour déterminer une limite supérieure et une limite inférieure d'une zone de valeurs de la grandeur dérivée de manière que, selon la deuxième distribution statistique continue ajustée, les valeurs de la grandeur dérivée se situent, avec une proportion égale à une probabilité statistique spécifiée, dans la zone de valeurs qui est limitée par les limites supérieure et inférieure.

5. Dispositif d'évaluation selon la revendication précédente, le module de formation de sous-groupes étant en outre conçu pour former une pluralité de deuxièmes sous-groupes à partir des valeurs de mesure d'un autre échantillon, chaque sous-groupe de la pluralité de sous-groupes comportant une pluralité de valeurs de mesure de l'autre échantillon,

   le module de calcul étant en outre conçu pour calculer une deuxième valeur de calcul de la grandeur dérivée pour chacun des deuxièmes sous-groupes,
   le dispositif d'évaluation comportant un module de détermination qui est relié au module de calcul et qui est conçu pour déterminer si une proportion des deuxièmes valeurs de calcul, qui est au moins égale à la probabilité statistique spécifiée, se situe dans la zone de valeurs qui est limitée par les limites supérieure et inférieure et, si ce n'est pas le cas, générer et délivrer un signal qui indique qu'une intervention dans le processus à la base d'un autre échantillon est nécessaire.

6. Dispositif d'évaluation selon la revendication 5 ou 6, le module de détermination étant conçu pour déterminer la limite supérieure et la limite inférieure, par rapport à des échantillons pour lesquels les valeurs de la grandeur dérivée peuvent se situer aussi bien au-dessus de la limite supérieure qu'au-dessous de la limite inférieure à déterminer, de manière qu'il y ait le même nombre de valeurs de calcul de la grandeur dérivée au-dessus de la limite supérieure à déterminer qu'au-dessous de la limite inférieure à déterminer, ou de manière que le nombre de valeurs de calcul de la grandeur dérivée au-dessus de la limite supérieure à déterminer et au-dessous de la limite inférieure à déterminer diffère au plus de un.

7. Programme informatique, comprenant des instructions qui, lorsque le programme informatique est exécuté par un ordinateur ou par un ensemble d'ordinateurs, amènent celui-ci ou ceux-ci à mettre en œuvre le procédé selon l'une des revendications de procédé précédentes.

8. Support de stockage lisible par ordinateur, comprenant des instructions qui, lorsqu'elles sont exécutées par un ordinateur ou un ensemble d'ordinateurs, amènent celui-ci ou ceux-ci à mettre en œuvre le procédé selon l'une des revendications de procédé précédentes.

Fig. 1

Fig. 2

Fig. 3

Fig. 4

Fig. 5

EP 4 130 656 B1

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A parametric bootstrap method of computation of control limits of charts for skewed distributions. **LUKIN, VLADIMIR et al.** 2015 IEEE NW RUSSIA YOUNG RESEARCHERS IN ELECTRICAL AND ELECTRONIC ENGINEERING CONFERENCE. IEEE, 02. Februar 2015, 102-109